(19) Europäisches Patentamt
European Patent Office
Office européen des brevets

(11) **EP 3 810 924 B1**

(12) **EUROPÄISCHE PATENTSCHRIFT**

(45) Veröffentlichungstag und Bekanntmachung des Hinweises auf die Patenterteilung:
**26.02.2025   Patentblatt 2025/09**

(21) Anmeldenummer: **19730335.7**

(22) Anmeldetag: **12.06.2019**

(51) Internationale Patentklassifikation (IPC):
**F03D 7/02** (2006.01)

(52) Gemeinsame Patentklassifikation (CPC):
**F03D 7/0276; F03D 7/0284;** F03D 7/048;
F05B 2270/3201; Y02E 10/72; Y02E 10/76

(86) Internationale Anmeldenummer:
**PCT/EP2019/065320**

(87) Internationale Veröffentlichungsnummer:
**WO 2019/243129 (26.12.2019 Gazette 2019/52)**

(54) **LEISTUNGSREDUZIERTER BETRIEB EINER WINDENERGIEANLAGE**

REDUCED POWER OPERATION OF A WIND TURBINE

FONCTIONNEMENT À PUISSANCE RÉDUITE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2018   DE 102018114935**

(43) Veröffentlichungstag der Anmeldung:
**28.04.2021   Patentblatt 2021/17**

(73) Patentinhaber: **Wobben Properties GmbH**
**26607 Aurich (DE)**

(72) Erfinder:
• **MESSING, Ralf**
 **26605 Aurich (DE)**
• **MÖLLER, Christian**
 **26603 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A2- 2 878 810     WO-A1-2014/026688
US-A1- 2010 286 835     US-A1- 2018 045 180
US-A1- 2018 051 675

**Beschreibung**

Die vorliegende Erfindung betrifft ein Verfahren zum Betreiben einer Windenergieanlage. Die vorliegende Erfindung betrifft auch eine Windenergieanlage.

Windenergieanlagen sind bekannt und sie erzeugen elektrische Leistung aus Wind und speisen diese elektrische Leistung üblicherweise in ein elektrisches Versorgungsnetz ein, das regelmäßig von Netzbetreibern unterhalten wird. Idealerweise werden Windenergieanlagen im sog. Netzparallelbetrieb betrieben, in dem jede Windenergieanlage so viel Leistung erzeugt und in das elektrische Versorgungsnetz einspeist, wie aufgrund des vorherrschenden Windes unter Berücksichtigung technischer Grenzen der betreffenden Windenergieanlage möglich ist.

Mit zunehmender Anzahl von Windenergieanlagen im elektrischen Versorgungsnetz wächst auch ihr Einfluss auf das Verhalten des elektrischen Versorgungsnetzes und kann unter Umständen auch die Stabilität des elektrischen Versorgungsnetzes beeinflussen. Aus diesem Grund gibt es u.a. auch leistungsreduzierte Betriebsmodi. Leistungsreduzierte Betriebsmodi wurden entwickelt, um Anforderungen von Netzbetreibern zu erfüllen, die z.B. bei viel Windaufkommen nur gedrosselte Einspeiseleistung von Windenergieanlagen oder Windparks anfragen, um eine Überlastung des elektrischen Versorgungsnetzes zu verhindern.

Zur Umsetzung kann ein reduziertes Nennleistungsniveau vorgegeben werden, wobei eine zugehörige reduzierte Nenndrehzahl aus einem leistungsoptimierten Betriebsmodus interpoliert werden kann. Es wird also ein reduzierter Leistungswert vorgegeben, der unterhalb der normalen Nennleistung der Windenergieanlage liegt. Dieser reduzierten Nennleistung ist eine Drehzahl zu zuordnen, die als reduzierte Nenndrehzahl angesehen werden kann. Diese dazugehörige Nenndrehzahl, die also dieser reduzierten Leistung, also dem reduzierten Nennleistungsniveau zugeordnet ist, kann einer Drehzahl-Leistungskennlinie entnommen werden, die für den Teillastbetrieb der Windenergieanlage vorgesehen ist.

Eine solche Drehzahl-Leistungskennlinie gibt somit den Zusammenhang zwischen Drehzahl und Leistung im Teillastbetrieb wieder und dabei wird mit steigender Drehzahl auch eine höhere Leistung zugeordnet und diese konkrete Zuordnung gibt die Drehzahl-Leistungskennlinie an. Für den leistungsreduzierten Betrieb, in dem nämlich die Leistung auf einen Wert reduziert wird, der niedriger ist, als die Anlage in dem Moment tatsächlich erzeugen könnte, wird somit auch weniger Leistung aus dem Wind entnommen, als möglich wäre. Das kann dadurch realisiert werden, dass die Rotorblätter entsprechend aus dem Wind gedreht werden, so dass der aerodynamische Rotor weniger Leistung aus dem Wind entnimmt, als in dem Moment möglich wäre. Aus Sicht des Generators entspricht das einer Situation, bei der tatsächlich entsprechend weniger Wind vorhanden ist. Entsprechend ist es naheliegend, bei künstlicher Leistungsreduzierung denselben Drehzahl-Leistungswert einzustellen, wie im Falle eines vorherrschenden Windes, der zu demselben Leistungswert führt.

Aus Generatorsicht ergibt sich zwar derselbe Betriebspunkt, aber es wurde festgestellt, dass diese künstliche Reduzierung zur Folge hat, dass leistungsreduzierte Betriebsmodi stets deutlich geringere Nenndrehzahlen aufweisen, als der leistungsoptimierte Modus. Die Drehzahlen sind also, jedenfalls im Nennbetrieb, wenn die jeweilige Leistungsgrenze erreicht wird, bei gleichem vorherrschenden Wind in dem leistungsreduzierten Betriebsmodus geringer als im normalen, also leistungsoptimierten Betriebsmodus.

Grundsätzlich wird die Nennleistung bei einer sog. Nennwindgeschwindigkeit erreicht. Ist diese Nennleistung in dem reduzierten Betriebsmodus reduziert, ist auch von einer verringerten Nennwindgeschwindigkeit für den leistungsreduzierten Betriebsmodus auszugehen, denn die reduzierte Nennleistung wird schon bei geringeren Windgeschwindigkeiten erreicht. Bei Windgeschwindigkeiten über der Nennwindgeschwindigkeit, sei es nun die normale oder die reduzierte, regelt die Windenergieanlage auf die entsprechende Nenndrehzahl durch Verstellen der Rotorblätter, was auch allgemein als Pitchen der Rotorblätter bezeichnet wird, unabhängig von der Windgeschwindigkeit, jedenfalls solange kein Sturmbetrieb vorliegt.

Die Regelung berücksichtigt nämlich in diesem sog. Nennbetrieb oder Volllastbetrieb nicht die Windgeschwindigkeit, sondern führt lediglich eine Regelung durch, die die Anlage auf Nennleistung und Nenndrehzahl regelt. Nimmt also bspw. die Windgeschwindigkeit in diesem Betriebsmodus zu, kann sich - anschaulich gesprochen - die Drehzahl und Leistung kurzzeitig etwas erhöhen, wobei dem regelungstechnisch entgegengewirkt wird, nämlich insbesondere durch Pitchen der Rotorblätter. Sofern das Generatormoment gleich bleibt, weil bspw. bei einem fremderregten Synchrongenerator die Erregung unverändert bleibt, führt eine Regelung auf eine konstante Nenndrehzahl im Grunde auch zwangsläufig zu einer konstanten Leistung, nämlich üblicherweise der Nennleistung.

In einem Sturmbetrieb, der ab einer vordefinierten Windgeschwindigkeit einsetzen kann, regelt die Windenergieanlage auf eine windgeschwindigkeitsabhängige Drehzahl, die im Sturmbetrieb von der Nenndrehzahl bis auf eine Trudeldrehzahl abfallen kann.

Somit wird dann besonders in diesem Nennbetrieb bzw. Volllastbetrieb die Windenergieanlage bei gleichen Windgeschwindigkeiten mit unterschiedlichen Drehzahlen betrieben. Besonders tritt auch der Effekt auf, dass die Drehzahl und damit die Umlaufgeschwindigkeit im leistungsreduzierten Betrieb geringer als im leistungsoptimalen Betrieb sind. Das wiederum bedeutet, dass sich die Schnelllaufzahl $\lambda$, die das Verhältnis der Umlaufgeschwindigkeit des aerodynamischen Rotors an seinen Blattspitzen zur Windgeschwindigkeit angibt, mit zunehmender Windgeschwindigkeit reduziert und dabei im leistungsreduzierten Betrieb geringer ist als im leistungsoptimalen Betrieb.

Es wurde erkannt, dass solche geringen Schnelllaufzahlen bei hohen Windgeschwindigkeiten und den entsprechenden Blattwinkeln zu Strömungsabrissen auf der Druckseite des Rotorblattprofils führen können. Problematisch kann dabei besonders sein, dass solche Strömungsabrisse in Bezug auf das Rotorblatt in seiner gesamten Länge nur an einigen Positionen auftreten. Das wiederum kann zu erhöhten Torsionsbelastungen führen.

Da solche Strömungsabrisse nur in Teilbereichen auftreten, wird die Windenergieanlage aber weiterhin vom Wind angetrieben, so dass sich der aerodynamische Rotor weiter dreht und weiter den Belastungen ausgesetzt ist.

Das Problem geringer Schnelllaufzahlen bei hoher Windgeschwindigkeit tritt dabei besonders im Übergangsbereich zum Sturmbetrieb auf. Genau dort liegt nämlich eine vergleichsweise geringe Schnelllaufzahl vor, bei gleichzeitig großer mechanischer Belastung durch den starken Wind, wohingegen noch keine gegen den Sturm schützende Reduzierung des Betriebs der Windenergieanlage durchgeführt wurde.

Das Deutsche Patent- und Markenamt hat in der Prioritätsanmeldung zu vorliegender Anmeldung folgenden Stand der Technik recherchiert: DE 198 44 258 A1, DE 10 2015 203 841 A1, DE 10 2016 124 630 A1 und US 2012/0139246 A1.

Das Dokument US 2018/0051675 A1 betrifft eine Leistungserhöhung einer Windturbine aus einem niedrigen Leistungsmodus, wobei auf Erhalt einer entsprechenden Anfrage, den niedrigen Leistungsmodus zu beenden, die Ausgangsleistung der Windturbine durch Pitchen der Rotorblätter des Rotors erhöht wird.

Der Erfindung liegt somit die Aufgabe zugrunde, zumindest eines der o.g. Probleme zu adressieren. Insbesondere soll eine Lösung vorgeschlagen werden, bei der Torsionsschwingungen im leistungsreduzierten Betrieb möglichst vermieden werden. Zumindest soll gegenüber bisher bekannten Lösungen eine alternative Lösung vorgeschlagen werden.

Erfindungsgemäß wird ein Verfahren zum Betreiben einer Windenergieanlage gemäß Anspruch 1 vorgeschlagen. Demnach wird von einer Windenergieanlage ausgegangen, die einen aerodynamischen Rotor mit Rotorblättern aufweist, insbesondere werden drei Rotorblätter vorgeschlagen. Dieser aerodynamische Rotor bzw. die Windenergieanlage insgesamt ist mit variabler Rotordrehzahl betreibbar. Im Betrieb gibt die Windenergieanlage eine aus Wind erzeugte Abgabeleistung zum Einspeisen in ein elektrisches Versorgungsnetz ab. Außerdem ist vorgesehen, dass die Windenergieanlage in einem Normalbetriebsmodus ohne Leistungsreduzierung und in einem reduzierten Betriebsmodus mit Leistungsreduzierung betreibbar ist. Besonders kann hier von extern, besonders von einem Netzbetreiber, der das elektrische Versorgungsnetz betreibt, eine Vorgabe für eine Leistungsreduzierung gefordert werden.

Dazu wird nun vorgeschlagen, dass die Windenergieanlage bei Betrieb in dem reduzierten Betriebsmodus für Windgeschwindigkeiten oberhalb einer Nennwindgeschwindigkeit zumindest in einem Drehzahlerhöhungsbereich ihre Rotordrehzahl bei weiter steigender Windgeschwindigkeit erhöht, wobei die Leistung weiterhin reduziert bleibt.

Es wird hier also gezielt der reduzierte Betriebsmodus betrachtet und von dem Normalbetriebsmodus wird angenommen, dass er vorzugsweise in bekannter Art und Weise arbeitet. In dem reduzierten Betriebsmodus wird durch die Leistungsreduzierung ein reduzierter Leistungswert angegeben, der auch als reduzierte Vorgabeleistung bezeichnet werden kann. Diese reduzierte Vorgabeleistung liegt unterhalb einer normalen Nennleistung der Windenergieanlage, also unterhalb einer unreduzierten Nennleistung, die auch als Anlagennennleistung bezeichnet werden kann.

Die Windenergieanlage arbeitet dann zunächst so, dass sie im Teillastbetrieb bei steigender Windgeschwindigkeit ihre Leistung und Drehzahl mit der steigenden Windgeschwindigkeit zusammen erhöht. Diese Erhöhung von Leistung und Drehzahl wird solange durchgeführt, bis die Leistung den vorgegebenen Grenzwert erreicht hat, also bis die Anlagenleistung die vorgegebene reduzierte Vorgabeleistung erreicht hat. Bisher wurde dann die Leistung und Drehzahl auf diesem Wert gehalten, der damit auch als reduzierte Nenndrehzahl bzw. reduzierte Vorgabeleistung bezeichnet werden kann.

Nun wird aber vorgeschlagen, bei weiter steigender Windgeschwindigkeit die Drehzahl auch weiter zu erhöhen, nämlich über diese reduzierte Nenndrehzahl hinaus. Die Abgabeleistung der Windenergieanlage kann dabei auf andere Art und Weise reduziert werden bzw. es kann auf andere Weise verhindert werden, dass sie sich weiter erhöht. Besonders kommt hier in Betracht, eine Erregung des Generators zu verringern, also ein Generatormoment zu verringern, so dass trotz sich weiter erhöhender Drehzahl die Leistung, also die Abgabeleistung der Windenergieanlage, nicht erhöht wird. Diese Drehzahlerhöhung muss aber nicht sofort erfolgen, sondern kann ggf. erst nach weiterem Anstieg der Windgeschwindigkeit vorgeschlagen werden.

Zumindest wird die Rotordrehzahl in einem Drehzahlerhöhungsbereich oberhalb der Nennwindgeschwindigkeit bei steigender Windgeschwindigkeit weiter erhöht. Die Nennwindgeschwindigkeit kann besonders auch eine reduzierte Nennwindgeschwindigkeit sein, nämlich diejenige, bei der die Abgabeleistung, wenn die übliche Drehzahl-Leistungskennlinie zugrunde gelegt wird, den Wert der reduzierten Vorgabeleistung erreicht. Somit bezieht sich die reduzierte Nennwindgeschwindigkeit auf den reduzierten Betriebsmodus. Eine Nennwindgeschwindigkeit wird nämlich häufig auf den jeweils verwendeten Betriebsmodus bezogen und bezeichnet die Windgeschwindigkeit, bei der die maximale Leistung des betreffenden Betriebsbereichs erreicht wird. Es kommt dabei auch in Betracht, dass die Erhöhung der Rotordrehzahl bei weiter steigendem Wind erst ab der normalen Nennwindgeschwindigkeit durchgeführt wird, also ab der Windgeschwindigkeit, bei der die Abgabeleistung bei zugrunde liegender normaler Drehzahl-Leistungskennlinie die normale Nennleistung der Windenergieanlage erreicht.

Es wurde erkannt, dass die Belastung der Windenergieanlage, besonders der Rotorblätter, überraschenderweise dadurch verringert werden kann, dass trotz Leistungsbegrenzung die Drehzahl weiter erhöht wird. Dadurch kann erreicht werden, dass die Schnelllaufzahl höher ist, im Vergleich zu einer Betriebskennlinie, bei der die Drehzahl nicht weiter erhöht werden würde. Dadurch können Strömungsabrisse auf der Druckseite des Rotorblattprofils vermieden werden und damit können besonders nur lokal auftretende Strömungsabrisse vermieden werden, wodurch wiederum Torsionsbelastungen und damit Torsionsschwingungen des Rotorblattes vermieden werden können. Das führt dann insgesamt zu einer geringeren Belastung im Vergleich zu einem Betriebsmodus, bei dem solche lokalen Strömungsabrisse und entsprechende Torsionsbelastungen und Torsionsschwingungen auftreten würden. Die Strömungsabrisse auf der Druckseite können auch stark erhöhte Lärmemissionen der Windkraftanlage zur Folge haben. Die Drehzahlerhöhung und die damit verbundene Vermeidung der Strömungsabrisse verhindert ebenso, dass es zu einer erhöhten Lärmemission infolge von Ablöselärm an der Anlage kommt. Auch hier ergibt sich der überraschende Effekt, dass eine Drehzahlerhöhung zu einer Geräuschverminderung führt, zumindest einer weiteren Geräuscherhöhung entgegensteht.

Vorzugsweise wird die Drehzahl im leistungsreduzierten Betriebsmodus mit steigender Windgeschwindigkeit maximal bis zur normalen, also nicht reduzierten Nenndrehzahl erhöht. Dabei wurde erkannt, dass zunächst eine weitere Zunahme der Drehzahl aufgrund des beschriebenen Effekts der Vermeidung eines lokalen Strömungsabrisses zunächst eine insgesamt verringerte Belastung zur Folge haben kann, die stärker zu werten ist, als eine geringe Belastungszunahme durch eine höhere Drehzahl. Es wurde aber auch erkannt, dass eine Drehzahlerhöhung nicht beliebig durchgeführt werden kann und die normale, unreduzierte Nenndrehzahl ein guter Wert ist, der möglichst nicht überschritten werden sollte. Dabei ist auch zu beachten, dass eine normale Nenndrehzahl häufig signifikant höher ist als eine reduzierte Nenndrehzahl. Vorzugsweise wird vorgeschlagen, dass die Erhöhung der Rotordrehzahl in dem reduzierten Betriebsmodus auf Werte oberhalb der normalen_Nenndrehzahl durchgeführt wird. Die Rotordrehzahl wird hierbei nicht nur bis auf Werte der Nenndrehzahl erhöht sondern kann, zumindest in einem Abschnitt, auch noch auf Werte darüber erhöht werden. Demnach wird trotz reduzierter Leistung die Drehzahl noch über die Nenndrehzahl erhöht. Es wurde nämlich erkannt, dass selbst durch die Erhöhung über die Nenndrehzahl eine Belastungsreduzierung erreicht werden kann.

Gemäß einer Ausführungsform wird vorgeschlagen, dass die Windenergieanlage in Abhängigkeit der vorherrschenden Windgeschwindigkeit in einem Teillastbetrieb, einem Volllastbetrieb oder einem Sturmbetrieb betrieben wird. Die Windenergieanlage weist also diese drei Betriebsarten auf und die sind jeweils einem Windgeschwindigkeitsbereich zugeordnet. Die konkrete Auswahl der jeweiligen Betriebsart kann in Abhängigkeit einer erfassten Windgeschwindigkeit erfolgen, sie kann aber auch abhängig von Zustandsgrößen erfolgen.

Im Teillastbetrieb liegt die Windgeschwindigkeit unterhalb einer Nennwindgeschwindigkeit, so dass eine maximal zu erzeugende Leistung nicht erreicht werden kann. Dann hängt also die Abgabeleistung von der Windgeschwindigkeit ab und insbesondere wird die Windenergieanlage so betrieben, dass die Abgabeleistung so groß wie möglich ist.

Im Volllastbetrieb liegt die Windgeschwindigkeit bei oder oberhalb der Nennwindgeschwindigkeit, aber unterhalb einer Sturmwindgeschwindigkeit, so dass die maximal zu erzeugende Leistung erzeugt wird. Die maximal zu erzeugende Leistung kann als Nennleistung bezeichnet werden. Hier wird zur besseren Unterscheidung zwischen dem Normalbetriebsmodus einerseits und dem reduzierten Betriebsmodus andererseits zwischen einer Anlagennennleistung und einer reduzierten Vorgabeleistung unterschieden. Die Anlagennennleistung ist insoweit die normale Nennleistung, auf die die Windenergieanlage ausgelegt ist. Die reduzierte Vorgabeleistung kann auch als reduzierte Nennleistung betrachtet werden, denn sie bezeichnet ebenfalls eine grundsätzlich nicht zu überschreitende Leistung, die aber unterhalb der Anlagennennleistung liegt und vorgegeben werden kann. Sie ist also nicht durch die Auslegung der Windenergieanlage gegeben, sondern kann im Betrieb vorgegeben werden, besonders durch einen Netzbetreiber.

Im Sturmbetrieb liegt die Windgeschwindigkeit bei oder oberhalb der Sturmanfangswindgeschwindigkeit, und zum Schutz der Windenergieanlage wird weniger als die maximale Leistung erzeugt, also zumindest weniger als die normale Nennleistung, also zumindest weniger als die Anlagennennleistung. Dies dient dem Schutz der Windenergieanlage und hier kann die Sturmanfangswindgeschwindigkeit als fester Wert vorgegeben werden und bezeichnet eine Windgeschwindigkeit, ab der für die betreffende Windenergieanlage von einem Sturmbetrieb auszugehen ist und die Windenergieanlage entsprechend betrieben wird. Die Sturmwindgeschwindigkeit ist insoweit ein allgemeiner Begriff, der Windgeschwindigkeiten im Sturmbetrieb beschreibt, also die Sturmanfangswindgeschwindigkeit und die darüber liegenden Windgeschwindigkeiten. Eine unterhalb der Sturmwindgeschwindigkeit liegende Windgeschwindigkeit liegt somit auch unterhalb der Sturmanfangswindgeschwindigkeit.

Es wird nun für die Rotordrehzahl der Windenergieanlage in dem reduzierten Betriebsmodus und dabei im Volllastbetrieb das folgende vorgeschlagen. Für Windgeschwindigkeiten oberhalb der Nennwindgeschwindigkeit bis zu einer Erhöhungswindgeschwindigkeit, die oberhalb der Nennwindgeschwindigkeit und unterhalb der Sturmanfangswindgeschwindigkeit liegt, hält die Windenergieanlage ihre Rotordrehzahl konstant auf einer reduzierten Nenndrehzahl. Für Windgeschwindigkeiten oberhalb der Erhöhungswindgeschwindigkeit erhöht die Windenergieanlage ihre Rotordrehzahl. Die Erhöhung erfolgt besonders so, dass sie mit weiter steigender Windgeschwindigkeit kontinuierlich, insbesondere linear, bis zur Sturmanfangswindgeschwindigkeit erhöht wird, oder dass sie mit weiter steigender Windgeschwindigkeit kontinuierlich bis zu einer normalen Nenndrehzahl erhöht wird.

Es wird somit eine Erhöhungswindgeschwindigkeit vorgegeben und diese liegt im Grunde innerhalb des Volllastbetriebs. Sie ist also höher als eine Nennwindgeschwindigkeit und geringer als eine Sturmanfangswindgeschwindigkeit. Demnach wird besonders vorgeschlagen, dass die Rotordrehzahl im reduzierten Betriebsmodus ab Nennwindgeschwindigkeit zunächst nicht weiter erhöht wird, bis aber die Windgeschwindigkeit den Wert der Erhöhungswindgeschwindigkeit erreicht hat. Dann wird mit weiter steigender Windgeschwindigkeit die Rotordrehzahl erhöht. Hier wurde besonders erkannt, dass zunächst, also bei vergleichsweise geringen Windgeschwindigkeiten im Volllastbetrieb, eine Drehzahlerhöhung im reduzierten Betriebsmodus zunächst nicht erforderlich ist, weil hier Probleme aufgrund zu niedriger Schnelllaufzahlen zunächst nicht zu erwarten sind. Erst später, wenn die Windgeschwindigkeit noch weiter gestiegen ist, können die beschriebenen Phänomene des Strömungsabrisses bei niedriger Schnelllaufzahl auftreten. Entsprechend wird eine solche Erhöhungswindgeschwindigkeit definiert. Besonders kann sie etwas unterhalb einer Windgeschwindigkeit liegen, bei der andernfalls die genannten Probleme durch geringe Schnelllaufzahl auftreten können.

Die Art der Erhöhung der Rotordrehzahl ab der Erhöhungswindgeschwindigkeit kann sich unterscheiden und hier werden besonders zwei Varianten vorgeschlagen. Gemäß der ersten Variante wird die Rotordrehzahl besonders ab der Erhöhungswindgeschwindigkeit mit weiter steigender Windgeschwindigkeit bis zur Sturmanfangswindgeschwindigkeit erhöht. Dann liegt nämlich der Sturmfall vor und dann ist die Windenergieanlage wieder in ihrem Betrieb so zu reduzieren, dass Anlagenbelastungen nicht überschritten werden. Grundsätzlich kann dann auch ein solcher windgeschwindigkeitsabhängiger Verlauf der Rotordrehzahl den Verlauf der Rotordrehzahl im Normalbetriebsmodus erreichen.

Gemäß der zweiten vorgeschlagenen Variante wird ab der Erhöhungswindgeschwindigkeit die Rotordrehzahl bis zu einer normalen Nenndrehzahl erhöht. Mit anderen Worten wird die Rotordrehzahl im reduzierten Betriebsmodus ab der Erhöhungswindgeschwindigkeit erhöht, bis sie die Windgeschwindigkeitsdrehzahlkennlinie bzw. den windgeschwindigkeitsabhängigen Drehzahlverlauf des Normalbetriebsmodus erreichen. Von diesem Moment bzw. diesem Zustand an kann dann die weitere Betriebsführung zumindest der Rotordrehzahl bei weiter steigender Windgeschwindigkeit im reduzierten Betriebsmodus gleich wie im Normalbetriebsmodus gesteuert werden.

Grundsätzlich können diese beiden Alternativen auch übereinstimmen, wenn nämlich die Rotordrehzahl die normale Nenndrehzahl genau bei der Sturmanfangswindgeschwindigkeit erreicht.

Hier wurde besonders erkannt, dass zunächst eine geringere Rotordrehzahl im reduzierten Betriebsmodus sinnvoll sein kann, diese aber ab einer gewissen Windgeschwindigkeit zu erhöhen ist, um die genannten Probleme der zu geringen Schnelllaufzahl zu vermeiden. Die weitere Erhöhung wird dabei so durchgeführt, dass der windgeschwindigkeitsabhängige Verlauf der Rotordrehzahl im reduzierten Betriebsmodus mit weiter steigender Windgeschwindigkeit den Rotordrehzahlverlauf des Normalbetriebsmodus erreicht. Ab dann können die Rotordrehzahlen in beiden Betriebsmodi auf gleiche Art und Weise geführt werden.

Gemäß einer Ausführungsform wird vorgeschlagen, dass in dem reduzierten Betriebsmodus die Abgabeleistung und/oder die Rotordrehzahl in dem Teillastbetrieb in Abhängigkeit einer vorgegebenen Kennlinie, insbesondere einer Drehzahl-Leistungskennlinie eingestellt wird, bis die Abgabeleistung den Wert der reduzierten Vorgabeleistung erreicht hat. Insoweit kann hier grundsätzlich dieselbe Betriebsführung wie in einem Normalbetriebsmodus zugrunde gelegt werden. Besonders wird die Abgabeleistung in Abhängigkeit der Drehzahl-Leistungskennlinie eingestellt. Das erfolgt besonders so, dass abhängig einer erfassten Rotordrehzahl die Abgabeleistung gemäß der Drehzahl-Leistungskennlinie eingestellt wird. Vorzugsweise ist hierbei der Rotorblattwinkel konstant, nämlich insbesondere im gesamten Teillastbetrieb konstant. Bleibt die Rotordrehzahl bei der eingestellten Abgabeleistung dann konstant, so hat sich ein stabiler Betriebspunkt eingestellt. Bleibt der aber nicht konstant und erhöht sich bspw., so wird die Abgabeleistung entsprechend auch weiter verändert, in dem genannten Beispiel also erhöht, könnte auch verringert werden. Dadurch erhöht bzw. verringert sich auch das Generatormoment bzw. das Gegenmoment, so dass sich hierdurch durch kontinuierliches Nachstellen der Abgabeleistung gemäß der Drehzahl-Leistungskennlinie ein stabiler Arbeitspunkt finden wird.

Insoweit wird die Abgabeleistung eingestellt und die Rotordrehzahl ergibt sich. Damit wird die Rotordrehzahl aber auch indirekt in Abhängigkeit der Drehzahl-Leistungskennlinie eingestellt. Je nach Betrachtungsweise werden also sowohl die Abgabeleistung als auch die Rotordrehzahl in Abhängigkeit der Drehzahl-Leistungskennlinie eingestellt. Im Übrigen kann auf ähnliche Art und Weise statt der Abgabeleistung auch ein Generatormoment eingestellt werden. Dabei ist zu beachten, dass die Drehzahl n mit dem Drehmoment M und der Leistung P im stationären Zustand über die Gleichung P=M*n zusammenhängen.

Es wird nun weiter vorgeschlagen, dass in dem reduzierten Betriebsmodus bei weiter steigender Windgeschwindigkeit, insbesondere in dem Volllastbetrieb, die Abgabeleistung auf den Wert der reduzierten Vorgabeleistung geregelt wird und gleichzeitig die Rotordrehzahl in Abhängigkeit einer erfassten, insbesondere gemessenen Windgeschwindigkeit eingestellt wird, insbesondere basierend auf einer Windgeschwindigkeits-Drehzahl-Kennlinie. Hier wird also vorgeschlagen, dass das Regelungskonzept grundsätzlich geändert wird. Es wird nämlich von der Steuerung von Leistung und Drehzahl in Abhängigkeit der Drehzahl-Leistungskennlinie umgestellt auf zwei im Wesentlichen unabhängige Regelungs- bzw. Steuerungszweige. Die Abgabeleistung wird also lediglich auf einen konstanten Wert geregelt, unabhängig davon, wie groß die Windgeschwindigkeit ist. Für die Drehzahl wird auch vorgeschlagen, eine Windgeschwindigkeits-Drehzahl-Kennlinie zu verwenden, was insoweit eine Steuerung der Rotordrehzahl ist, zumindest ein Sollwert der Rotordrehzahl wird gesteuert bzw. vorgegeben. Die Umsetzung eines solchen Sollwertes für die Rotordrehzahl kann dann allerdings noch mittels einer Regelung durchgeführt werden.

Hier wurde besonders auch erkannt, dass grundsätzlich eine Regelung oder Steuerung der Windenergieanlage in Abhängigkeit einer erfassten, nämlich insbesondere gemessenen Windgeschwindigkeit grundsätzlich unerwünscht ist, weil das Erfassen einer Windgeschwindigkeit regelmäßig großen Ungenauigkeiten unterliegt. Es wurde dazu aber auch erkannt, dass hier die abhängig der Windgeschwindigkeit eingestellte Rotordrehzahl leichte Abweichungen von der vorgegebenen Windgeschwindigkeits-Drehzahl-Kennlinie verkraftet, denn sie stellt eine Verbesserung gegenüber der bisher hier verwendeten reduzierten Rotordrehzahl dar und liegt zumindest die meiste Zeit noch unterhalb einer unreduzierten Nenndrehzahl. Außerdem wird durch die entkoppelte Steuerung bzw. Regelung von Drehzahl und Leistung das Regeln der Leistung weiterhin unabhängig der erfassten Windgeschwindigkeit durchgeführt.

Weiter wird vorgeschlagen, dass in dem reduzierten Betriebsmodus bei weiter steigender Windgeschwindigkeit ab oder oberhalb der Sturmanfangswindgeschwindigkeit die Abgabeleistung und die Rotordrehzahl in Abhängigkeit der erfassten, insbesondere gemessenen Windgeschwindigkeit eingestellt wird. Insbesondere erfolgt dieses Einstellen basierend auf jeweils einer Kennlinie für jede dieser beiden Größen. Somit wird für den Sturmbetrieb noch ein anderes Regelungskonzept vorgeschlagen, demgemäß nämlich sowohl die Drehzahl als auch die Leistung jeweils abhängig einer erfassten Windgeschwindigkeit eingestellt werden. Auch hier kann natürlich die Umsetzung einer solchen Einstellung mittels einer Regelung erfolgen.

Gemäß einer Ausführungsform wird vorgeschlagen, dass die Erhöhung der Rotordrehzahl in dem reduzierten Betriebsmodus oberhalb der Nenndrehzahl in Abhängigkeit einer für eine Belastung der Rotorblätter repräsentativen Größe durchgeführt wird, insbesondere in Abhängigkeit einer erfassten Schwingung wenigstens eines der Rotorblätter, besonders einer Torsionsschwingung. Dadurch kann einer solchen Schwingung unmittelbar entgegen gewirkt werden. Dabei ist zu beachten, dass es eher als ungewöhnlich anzusehen ist, bei auftretenden Schwingungen der Rotorblätter die Drehzahl zu erhöhen, denn grundsätzlich führt eine Drehzahlerhöhung eher zu einer Belastungserhöhung. Hier wurde aber erkannt, dass eine Drehzahlerhöhung zu einer Erhöhung der Schnelllaufzahl führt und in dem Betriebsmodus Torsionsschwingungen vermeiden kann.

Es wird also vorgeschlagen, dass die Erhöhung der Rotordrehzahl auch quantitativ in Abhängigkeit der Belastung oder einer dazu repräsentative Größe geführt wird. Besonders kommt hier eine belastungsabhängige Drehzahlregelung in Betracht.

Außerdem oder alternativ wird vorgeschlagen, dass die Erhöhung der Rotordrehzahl in dem reduzierten Betriebsmodus oberhalb der Nenndrehzahl durchgeführt wird, sobald die für eine Belastung der Rotorblätter repräsentative Größe bzw. die erfasste Schwingung wenigstens eines der Rotorblätter einen vorbestimmten Belastungsgrenzwert überschreitet. Somit können hier Belastungen aufgenommen werden und ein Grenzwert festgelegt werden, dessen Überschreiten zu einer Reaktion führt, nämlich die Rotordrehzahl zu erhöhen. Die beiden genannten Alternativen können auch kombiniert werden, indem nämlich die genannte Belastung sowohl ein Erhöhen der Rotordrehzahl auslöst, als auch dass diese Belastung auch quantitativ die Erhöhung der Rotordrehzahl führt.

Gemäß einer Ausführungsform wird vorgeschlagen, dass dem Normalbetriebsmodus eine von der Windgeschwindigkeit abhängige Normaldrehzahlkennlinie zugrunde liegt.

Diese Normaldrehzahlkennlinie beschreibt im Grunde den Drehzahlwert in Abhängigkeit der Windgeschwindigkeit. Das muss nicht bedeuten, dass die Drehzahl vollständig basierend auf dieser Normaldrehzahlkennlinie derart geführt wird, dass sie immer abhängig einer erfassten Windgeschwindigkeit eingestellt wird. Diese Normaldrehzahlkennlinie liegt zunächst einer Auslegung zugrunde, wird also für die Auslegung der Windenergieanlage verwendet, kann ggf. abschnittsweise, besonders im Sturmbetrieb, aber auch tatsächlich zum Einstellen der Drehzahl verwendet werden.

Weiterhin liegt dem reduzierten Betriebsmodus eine von der Windgeschwindigkeit abhängige reduzierte Drehzahlkennlinie zugrunde. Auch diese beschreibt den Verlauf der Drehzahl in Abhängigkeit der Windgeschwindigkeit, hier aber für den reduzierten Betriebsmodus. Auch hier muss das aber nicht bedeuten, dass die Rotordrehzahl in jedem Bereich abhängig dieser Drehzahlkennlinie, also abhängig der Windgeschwindigkeit eingestellt wird, was allerdings zumindest teilweise der Fall sein kann.

Für die reduzierte Drehzahlkennlinie wird vorgeschlagen, dass diese im Volllastbetrieb bis zu einer Vereinigungswindgeschwindigkeit geringere Drehzahlwerte aufweist, als die Normaldrehzahlkennlinie bei gleichen Windgeschwindigkeitswerten und dass ab der Vereinigungswindgeschwindigkeit für weiter steigende Windgeschwindigkeit die reduzierte Drehzahlkennlinie mit der Normaldrehzahlkennlinie teilweise oder vollständig übereinstimmt. Außerdem oder alternativ ist vorgesehen, dass die reduzierte Drehzahlkennlinie zumindest abschnittsweise höhere Drehzahlen aufweist, als die Normaldrehzahlkennlinie. Besonders kann hier vorgesehen sein, dass die reduzierte Drehzahlkennlinie die Normaldrehzahlkennlinie bei der Vereinigungswindgeschwindigkeit schneidet und dann mit weiter steigender Windgeschwindigkeit zunächst höhere Werte aufweist. Spätestens bei Windgeschwindigkeitswerten, bei denen im Normalbetriebsmodus im Sturmbetrieb die Abgabeleistung die reduzierte Vorgabeleistung erreicht, können beide Drehzahlkennlinien übereinstimmen.

Hier wurde besonders erkannt, dass bei der Vereinigungswindgeschwindigkeit die beiden Drehzahlkennlinien zwar dieselbe Drehzahl aufweisen, die Leistungen aber dennoch unterschiedlich sind und entsprechend auch ein anderer Blatteinstellwinkel vorliegt und daher für den reduzierten Betriebsmodus trotz gleicher Drehzahl ungünstigere Strömungsbedingungen am Rotorblatt vorliegen können.

Vorsorglich wird darauf hingewiesen, dass die reduzierte Drehzahlkennlinie die Drehzahlkennlinie bezeichnet, die dem reduzierten Betriebsmodus zugeordnet ist. Sie muss nicht in jedem Fall auch eine geringere Drehzahl aufweisen, als die Normaldrehzahlkennlinie.

Vorzugsweise wird vorgeschlagen, dass in dem reduzierten Betriebsmodus die Rotordrehzahl bei Nennwindgeschwindigkeit geringer ist, als bei Sturmanfangswindgeschwindigkeit und/oder dass die Vereinigungswindgeschwindigkeit der Sturmanfangswindgeschwindigkeit entspricht, oder darunter liegt. Es wird somit besonders vorgeschlagen, dass die Rotordrehzahl des reduzierten Betriebsmodus auch im Volllastbetrieb noch zur Sturmanfangswindgeschwindigkeit hin ansteigt. Auch ist zu beachten, dass üblicherweise ein Drehzahlanstieg nur im Teillastbetrieb bis zum Volllastbetrieb erfolgt und die Drehzahl im Volllastbetrieb nicht weiter erhöht wird, um Belastungen zu vermeiden. Hier wird nun vorgeschlagen, im Volllastbetrieb die Rotordrehzahl dennoch weiter zu erhöhen und dadurch eine Belastungsreduzierung zu erreichen. Hier wird die Erhöhung selbst in Richtung zum Sturmbetrieb hin vorgeschlagen, obwohl gerade im Sturmbetrieb eher von einer Drehzahlreduzierung erwartet wird, dass sie Belastungen reduziert.

Gemäß einer Ausführungsform wird vorgeschlagen, dass in dem Teillastbetrieb ein von der Windgeschwindigkeit abhängiger Drehzahlverlauf vorgegeben wird, der im Normalbetriebsmodus und dem reduzierten Betriebsmodus gleich ist, bis die Abgabeleistung die reduzierte Vorgabeleistung erreicht. Dazu wird weiter vorgeschlagen, dass der Wert der Rotordrehzahl, der sich einstellt, wenn die Abgabeleistung die reduzierte Vorgabeleistung erreicht hat, eine reduzierte Nenndrehzahl bildet, wobei gleichzeitig eine reduzierte Nennwindgeschwindigkeit vorliegt. Dabei liegt die reduzierte Nenndrehzahl unterhalb einer Anlagennenndrehzahl, und die reduzierte Nennwindgeschwindigkeit liegt unterhalb einer Anlagennennwindgeschwindigkeit. Dazu wird weiterhin vorgeschlagen, dass im dem reduzierten Betriebsmodus bei weiter steigender Windgeschwindigkeit bis zu der Erhöhungswindgeschwindigkeit die Rotorblätter so verstellt werden, dass die Abgabeleistung nicht weiter erhöht wird. Insbesondere wird vorgeschlagen, dass die Abgabeleistung den Wert der reduzierten Vorgabeleistung beibehält, und die Rotordrehzahl auf den Wert der reduzierten Nenndrehzahl gehalten wird.

Demnach wurde erkannt, dass für den reduzierten Betriebsmodus systematisch gleiche Eckkennwerte wie für den Normalbetriebsmodus zugrunde gelegt werden können. Es wird eine Rotordrehzahlerhöhung für den reduzierten Betriebsmodus vorgeschlagen, aber anfangs wird vorgeschlagen, die Rotordrehzahl auf den Wert der reduzierten Nenndrehzahl zu halten und sie erst ab der Erhöhungswindgeschwindigkeit zu erhöhen. Die Rotordrehzahl kann im reduzierten Betriebsmodus zunächst vergleichsweise gering sein und auch gehalten werden, besonders am Anfang des Volllastbetriebs, und dann erhöht werden, wenn dies zur Reduzierung der genannten Torsionsbelastungen aus den genannten Gründen zweckmäßig ist.

Vorzugsweise wird vorgeschlagen, dass die Erhöhungswindgeschwindigkeit wenigstens um 10 % oberhalb der Nennwindgeschwindigkeit liegt, insbesondere 10 % oberhalb der Nennwindgeschwindigkeit des Normalbetriebsmodus, also 10 % oberhalb der Anlagennennwindgeschwindigkeit. Weiterhin wird vorgeschlagen, dass die Erhöhungswindgeschwindigkeit dabei wenigstens 10 % unterhalb der Sturmanfangswindgeschwindigkeit liegt. Es ist somit ein signifikanter Bereich vorgesehen, in dem die Rotordrehzahl von der Erhöhungswindgeschwindigkeit bis zur Sturmanfangswindgeschwindigkeit erhöht werden kann, wohingegen gleichzeitig vorgeschlagen wird, dass eine Erhöhung nicht sofort ab Nenndrehzahl erfolgt, sondern erst zu einem signifikant höheren Wert der Windgeschwindigkeit.

Gemäß einer weiteren Ausführungsform wird vorgeschlagen, dass die Rotordrehzahl und die Abgabeleistung in dem Teillastbetrieb abhängig einer Drehzahlleistungskennlinie gesteuert werden, wobei bis zur reduzierten Vorgabeleistung bzw. bis zur reduzierten Nennleistung für den Normalbetriebsmodus und den reduzierten Betriebsmodus die gleiche Drehzahl-Leistungskennlinie verwendet wird. Dazu wird weiter vorgeschlagen, dass die Rotordrehzahl und die Abgabeleistung ab einer Windgeschwindigkeit oberhalb der zweiten Sturmwindgeschwindigkeit, die größer als die Sturmanfangswindgeschwindigkeit ist, mit zunehmender Windgeschwindigkeit reduziert werden. Für die Reduzierung der Rotordrehzahl wird dabei eine von der Windgeschwindigkeit abhängige Drehzahlkennlinie vorgegeben und für die Reduzierung der Abgabeleistung wird eine Leistungskennlinie vorgegeben. Für den Normalbetriebsmodus und den reduzierten Betriebsmodus werden dabei die gleiche Drehzahlkennlinie und die gleiche Leistungskennlinie für Windgeschwindigkeiten ab der zweiten Sturmwindgeschwindigkeit verwendet.

Besonders wird vorgeschlagen, dass für den Normalbetriebsmodus und den reduzierten Betriebsmodus unterschiedliche Leistungskennlinien für den Bereich von der Sturmanfangswindgeschwindigkeit bis zur zweiten Sturmwindgeschwindigkeit verwendet werden. Vorzugsweise sind in diesem Bereich die Drehzahlkennlinien aber gleich, zumindest abschnittsweise gleich.

Auch hier wurde erkannt, dass ab der zweiten Sturmwindgeschwindigkeit der Normalbetriebsmodus und der reduzierte Betriebsmodus identisch betrieben werden können.

Erfindungsgemäß wird auch eine Windenergieanlage vorgeschlagen. Diese umfasst

- einen elektrischen Generator zum Erzeugen elektrischer Leistung,
- einen aerodynamischen Rotor mit Rotorblättern zum Erzeugen einer mechanischen Leistung aus Wind zum Antreiben des Generators, wobei der Rotor mit variabler Rotordrehzahl betreibbar ist,
- eine Einspeiseeinrichtung, um eine aus Wind erzeugte Abgabeleistung in ein elektrisches Versorgungsnetz an einem Netzanschlusspunkt einzuspeisen,
- eine Umschalteinrichtung zum Umschalten eines Betriebs der Windenergieanlage zwischen einem Normalbetriebsmodus ohne Leistungsreduzierung und einem reduzierten Betriebsmodus mit Leistungsreduzierung, wobei in dem reduzierten Betriebsmodus eine gegenüber einer Anlagennennleistung reduzierte Vorgabeleistung vorgegeben wird, und
- eine Steuereinrichtung, die dazu vorbereitet ist, die Windenergieanlage so zu steuern, dass bei Betrieb in einem reduzierten Betriebsmodus und für Windgeschwindigkeiten oberhalb einer Nennwindgeschwindigkeit, zumindest in einem Drehzahlerhöhungsbereich, die Rotordrehzahl bei weiter steigender Windgeschwindigkeit erhöht wird, wobei trotz sich weiter erhöhender Drehzahl die Abgabeleistung nicht erhöht wird.

Es wird somit insbesondere eine Windenergieanlage vorgeschlagen, die entsprechende Einrichtungen aufweist, um wenigstens ein Verfahren zum Betreiben einer Windenergieanlage gemäß einer vorstehend beschriebenen Ausführungsform auszuführen.

Der elektrische Generator kann dazu vorzugsweise als fremderregter oder konstant erregter Synchrongenerator ausgebildet sein. Vorzugsweise wird eine getriebelose Windenergieanlage vorgeschlagen, bei der der aerodynamische Rotor unmittelbar mit einem elektrodynamischen Rotor bzw. Läufer des Generators mechanisch verbunden ist.

Die Einspeiseeinrichtung ist vorzugsweise als Wechselrichter bzw. Wechselrichteranordnung mit mehreren Wechselrichtern ausgebildet. Diese können ihre Leistung von dem Generator erhalten, entweder über einen Gleichrichter, der einen Gleichstrom bzw. eine Gleichspannung liefert, die der Wechselrichter dann in einspeisbaren Wechselstrom umwandelt. Es kommt aber auch in Betracht, dass die Einspeiseeinrichtung als Vollumrichter ausgebildet ist, insbesondere als sog. Back-To-Back-Converter, der an einer Seite einen Wechselstrom erzeugt und an einer anderen Seite einen Wechselstrom für einen Generator empfängt und mit dieser anderen Seite auch den Generator zumindest teilweise steuern kann, nämlich insbesondere einen mehrphasigen Statorstrom des Generators steuern kann.

Die Umschalteinrichtung zum Umschalten eines Betriebs der Windenergieanlage zwischen Normalbetriebsmodus und reduziertem Betriebsmodus kann vorzugsweise in einem Prozessrechner vorgesehen sein und dort bspw. als Steuereinrichtung implementiert sein, nämlich bspw. programmiert sein.

Auch die Steuereinrichtung kann in demselben Prozessrechner oder einem weiteren Prozessrechner ausgebildet sein und die beschriebenen Steuerschritte dadurch durch diesen Prozessrechner umsetzen. Insbesondere ist die Steuereinrichtung mit Einspeiseeinrichtung so verbunden, dass sie Steuersignale an die Einspeiseeinrichtung gibt. Auch kann die Steuereinrichtung dazu vorbereitet sein, Signale an die Umschalteinrichtung zu geben. Es kommt auch in Betracht, dass die Steuereinrichtung vorzugsweise mit Messmitteln verbunden ist, insbesondere mit Messmitteln zum Erfassen der Windgeschwindigkeit, einer Rotordrehzahl und/oder einer Abgabeleistung der Windenergieanlage.

Es ist auch möglich, dass die Umschalteinrichtung Teil der Steuereinrichtung ist.

Vorzugsweise ist die Windenergieanlage dazu vorbereitet, wenigstens ein Verfahren zum Betreiben einer Windenergieanlage gemäß einem der vorstehend beschriebenen Ausführungsform umzusetzen, indem dies ganz oder teilweise mittels der Steuereinrichtung durchgeführt wird. Insbesondere ist somit die Steuereinrichtung dazu vorbereitet, wenigstens eines der vorstehend beschriebenen Verfahren zum Betreiben einer Windenergieanlage umzusetzen.

Erfindungsgemäß wird auch ein Windpark vorgeschlagen, der mehrere Windenergieanlagen gemäß wenigstens einer Ausführungsform der vorstehend beschriebenen Windenergieanlagen aufweist. Besonders kann der Windpark eine zentrale Parksteuerung aufweisen, um jeweils eine reduzierte Vorgabeleistung an die Windenergieanlagen zu geben, insbesondere in Abhängigkeit einer von extern empfangenen gesamten Leistungsreduzierung für den Windpark. Hierüber kann besonders ein Netzbetreiber eine gesamte Leistungsreduzierung als Vorgabe an den Windpark übergeben, bspw. als entsprechendes Anforderungssignal. Das kann unmittelbar an die Parksteuerung erfolgen. Der Windpark setzt dann diese empfangene gesamte Leistungsreduzierung in einzelne Leistungsreduzierungen für die einzelnen Windenergieanlagen um. Das kann durch konkrete Werte erfolgen, das kann auch prozentual erfolgen. Vorzugsweise erfasst die zentrale Parksteuerung dafür die tatsächlich in das elektrische Versorgungsnetz eingespeiste Leistung bzw. die Summe aller Abgabeleistungen der Windenergieanlage des Windparks und kann abhängig davon erkennen, ob die von extern empfangene gesamte Leistungsreduzierung erreicht wird oder nicht und dann ggf. die reduzierten Vorgabeleistungen an die Windenergieanlagen anpassen. Auch das kann als absolute Werte oder durch einen prozentualen Wert erfolgen, der bspw. einen prozentualen Wert für jede Windenergieanlage bezogen auf ihre Anlagennennleistung angibt.

Die Erfindung wird nun nachfolgend anhand von Ausführungsformen unter Bezugnahme auf die begleitenden Figuren beispielhaft näher erläutert.

Figur 1     zeigt eine Windenergieanlage in einer perspektivischen Darstellung.

Figur 2     zeigt einen Windpark in einer schematischen Darstellung.

Figur 3     zeigt schematisch ein Diagramm mit zwei Betriebskennlinien, nämlich für einen leistungsoptimierten Betrieb und einen leistungsreduzierten Betrieb.

Figur 4     zeigt ein vereinfachtes Diagramm, das einen Zusammenhang zwischen Drehzahlverläufen und der Windgeschwindigkeit bei Volllast und Sturm veranschaulicht.

Figur 5     zeigt ein schematisches Diagramm effektiver aerodynamischer Anstellwinkel in Abhängigkeit einer Radiusposition des Rotorblattes für unterschiedliche Betriebszustände.

Figur 6     zeigt ein vereinfachtes Diagramm zu effektiven aerodynamischen Anstellwinkeln abhängig einer Radiusposition des Rotorblattes für unterschiedliche Betriebskennlinien.

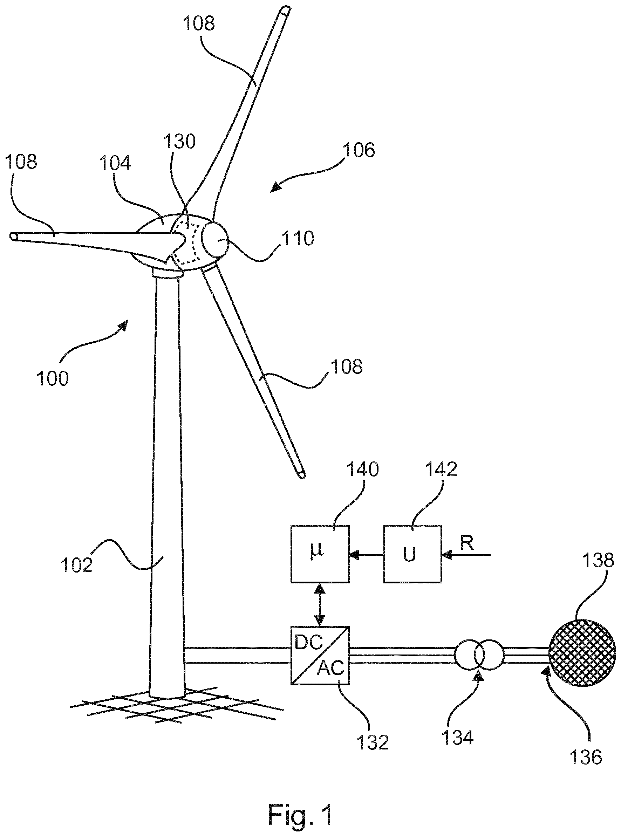

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

In Figur 1 ist zudem in der Gondel 104 ein Generator 130 angedeutet, der elektrische Leistung erzeugt und an einen Wechselrichter 132 überträgt, wobei zuvor der vom Generator erzeugte Wechselstrom gleichgerichtet wurde. Der Wechselrichter 132 speist über einen Transformator 134 an einem Netzanschlusspunkt 136 in das elektrische Versorgungsnetz 138 ein.

Zum Steuern des Wechselrichters 132 ist eine Steuereinrichtung 140 vorgesehen, die den Wechselrichter 132, der eine Einspeiseeinrichtung bildet, ansteuert. Für einen leistungsreduzierten Betriebsmodus kann ein Reduktionssignal R an eine Umschalteinrichtung 142 gegeben werden. Die Umschalteinrichtung 142, die auch Teil der Steuereinrichtung 140 sein kann, initiiert dann einen Wechsel vom Normalbetriebsmodus in den reduzierten Betriebsmodus.

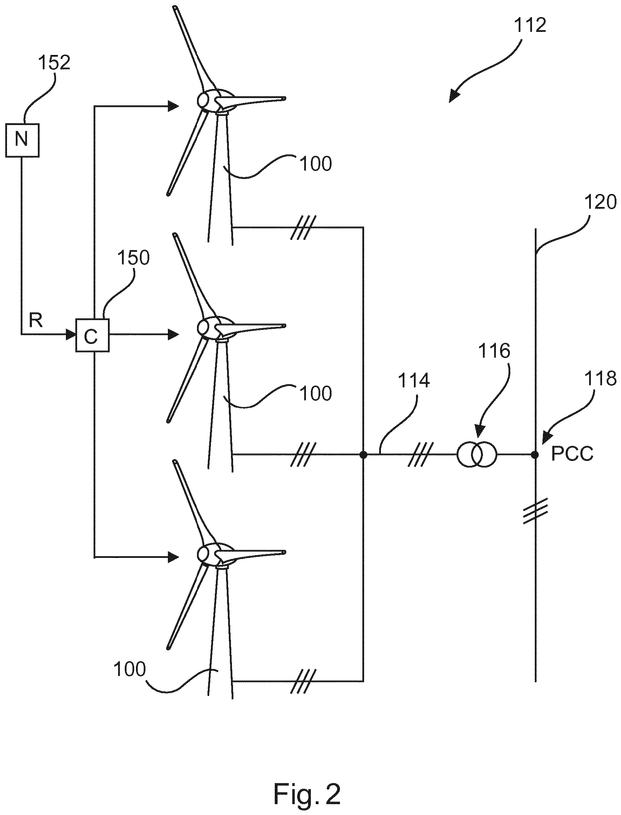

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 der Figur 2 kann zusätzlich eine zentrale Parksteuerung 150 aufweisen. Diese zentrale Parksteuerung 150 kann ein Leistungsreduzierungssignal R von einem Netzbetreiber 152 und damit von extern empfangen. Die zentrale Parksteuerung 150 kann aus diesem Reduzierungssignal R einzelne Werte oder prozentuale Werte für die Leistungsreduzierung der einzelnen Windenergieanlagen 100 ausgeben.

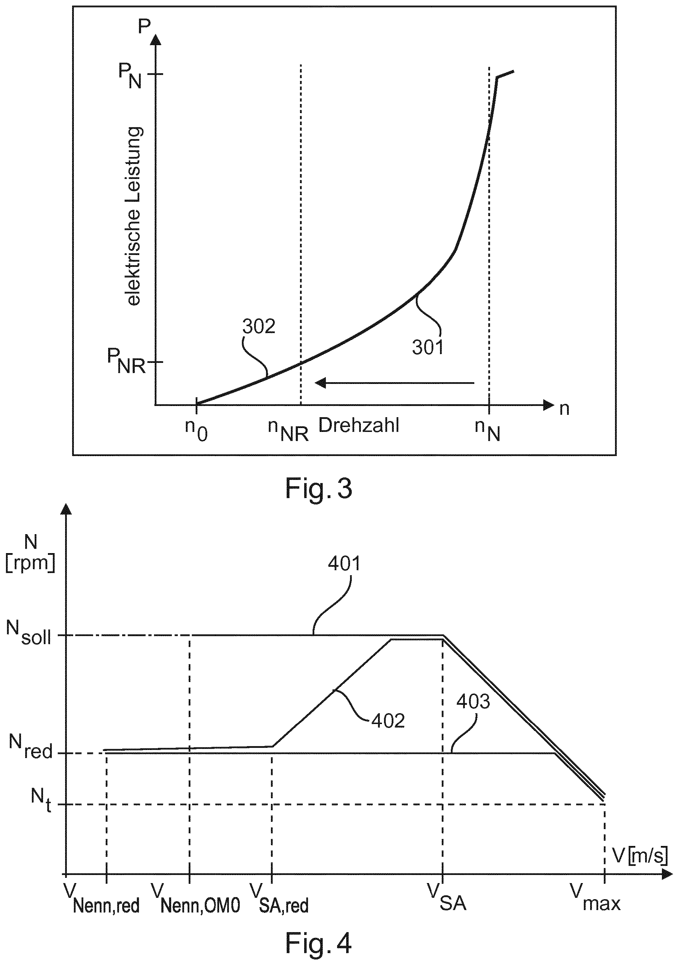

Figur 3 zeigt schematisch zwei Betriebskennlinien, nämlich sog. Drehzahl-LeistungsKennlinien. Davon betrifft die erste Drehzahl-Leistungs-Kennlinie 301 einen normalen Betriebsmodus, nämlich eine sog. leistungsoptimierte Betriebskennlinie. Hier ist der Anlagenbetrieb optimiert und entsprechend die Drehzahl-Leistungs-Kennlinie 301 optimal ausgelegt und auch auf den Rotorblatt- und den entsprechend gewählten Blattwinkel abgestimmt. Die Leistung P steigt somit ab einer Anlaufdrehzahl $n_0$ mit steigender Drehzahl bis zur Nenndrehzahl $n_N$ an und erreicht dann auch Nennleistung $P_N$, nämlich Anlagennennleistung.

Eine leistungsreduzierte Betriebskennlinie 302 stimmt zumindest anfangs mit der ersten Betriebskennlinie, also der ersten Drehzahl-Leistungs-Kennlinie 301 überein, bis sie die reduzierte Nenndrehzahl $n_{NR}$ und die reduzierte Nennleistung $P_{NR}$ erreicht hat. Dann ist die reduzierte Vorgabeleistung, die dieser reduzierten Nennleistung $P_{NR}$ entspricht, erreicht und die Abgabeleistung darf nicht weiter erhöht werden. Gleichzeitig wird die Rotordrehzahl n auf diesen niedrigen Drehzahlwert quasi eingefroren. Die Rotordrehzahl n weist dann also diesen reduzierten Nennleistungsdrehzahlwert $n_{NR}$ auf und behält diesen bei.

Figur 4 zeigt gemäß einer Ausführungsform der Erfindung einen Verlauf einer Rotordrehzahl für drei Betriebsfälle, nämlich einen leistungsoptimierten Verlauf 401, einen leistungsreduzierten, verbesserten Verlauf 402 und einen leistungsreduzierten, nicht verbesserten Verlauf 403.

Der Anlagenbetrieb oberhalb der Nennwindgeschwindigkeit soll somit mit Hilfe der Figur 4 verdeutlicht werden. Figur 4 zeigt den Zusammenhang zwischen der Drehzahl und der Windgeschwindigkeit im Betriebsbereich der Anlage im Volllastbereich des jeweiligen Betriebsmodus, also für Windgeschwindigkeiten oberhalb der für den jeweiligen Betriebsmodus geltenden Nennwindgeschwindigkeit. Der Teillastbetrieb bis zum Erreichen der Nenndrehzahl ist aus Gründen der besseren Übersichtlichkeit nicht dargestellt.

Der leistungsoptimierte Verlauf 401 zeigt somit den leistungsoptimierten Betriebsmodus OM0. Ab der Nennwindgeschwindigkeit $V_{Nenn,OM0}$ wird die Anlage auf die konstante Nenndrehzahl $N_{Soll}$ geregelt bis zur Sturmanfangswindgeschwindigkeit $V_{SA}$, bei der die Anlage in den Sturmbetrieb übergeht, in dem die Drehzahl von der Nenndrehzahl $N_{Soll}$ des leistungsoptimierten Modus OM0 linear bis auf die Trudeldrehzahl Nt bei der Abschaltwindgeschwindigkeit Vmax abgesenkt wird.

Der leistungsreduzierte Modus hat, wie erwähnt, eine geringere Nenndrehzahl $N_{red}$ und eine ebenso verringerte Nennwindgeschwindigkeit $V_{Nenn,red}$, in Figur 4 durch den leistungsreduzierten, nicht verbesserten Verlauf 403 dargestellt. Auch im reduzierten Betriebsmodus wurde bisher bei Volllastbetrieb die Anlage auf ihrer konstanten Nenndrehzahl geregelt bis der Sturmbetrieb erreicht wurde. Im reduzierten Betriebsmodus ist das die reduzierte Nenndrehzahl $N_{red}$. Da die Drehzahl nun bereits reduziert ist, wird die Anlage demzufolge erst bei höheren Windgeschwindigkeiten als $V_{SA}$ linear auf die Trudeldrehzahl $N_t$ bei der Abschaltwindgeschwindigkeit $V_{max}$ abgesenkt.

Es wurde nun erkannt, dass diese Vorgehensweise jedoch den Nachteil hat, dass sich beim Betrieb auf der abgesenkten Nenndrehzahl $N_{red}$ kleine Schnelllaufzahlen einstellen, die Anstellwinkelverteilungen mit hohen negativen Anstellwinkeln im Außenbereich des Rotorblattes nach sich ziehen. Aufgrund möglicher aeroelastischer Probleme sind jedoch diese hohen negativen Anstellwinkel nicht erwünscht, was nun erkannt wurde.

Daher wird eine verbesserte Betriebsführung im Volllastbereich bei leistungsreduzierten Betriebsmodi vorgeschlagen, die diese hohen negativen Anstellwinkel vermeidet, in Figur 4 durch den leistungsreduzierten, verbesserten Verlauf 402 dargestellt. Zunächst dreht sich der Rotor der Anlage wie bei dem leistungsreduzierten, nichtverbesserten Verlauf 402 auf der reduzierten Nenndrehzahl $N_{red}$. Ab einer vorgegebenen Windgeschwindigkeit $V_{SA,red}$, die kleiner als die Sturmanfangswindgeschwindigkeit $V_{SA}$ ist, wird die Drehzahl in beliebiger Weise, jedoch vorzugsweise linear, angehoben auf eine wieder konstante Drehzahl, die größer als $N_{red}$ ist, vorzugsweise auf $N_{Soll}$. Ab dann nimmt die Drehzahl-Windgeschwindigkeitskennlinie denselben Verlauf an wie beim leistungsoptimierten Mode OM0 gemäß dem leistungsoptimierte Verlauf 401

Die Windgeschwindigkeit $V_{SA,red}$ muss nicht wie in der Abbildung angedeutet größer als $V_{Nenn,OM0}$ sein, sondern kann auch darunterliegen, ist in jedem Fall aber größer als $V_{Nenn,red}$. Die Windgeschwindigkeit $V_{SA,red}$ kann im Vorfeld durch Simulationen festgelegt werden und hängt mindestens vom Anlagentyp und der reduzierten Nennleistung ab. Alternativ wird vorgeschlagen, dass im Betrieb der Anlage Schwingungen gemessen werden und bei Überschreiten von Schwellenwerten, die Anlage auf eine höhere Drehzahl gefahren wird. Die Windgeschwindigkeit $V_{SA,red}$ ist in jedem Fall kein fester Wert, sondern unterscheidet sich von Anlagentyp zu Anlagentyp aufgrund der unterschiedlichen Rotorblattauslegungen.

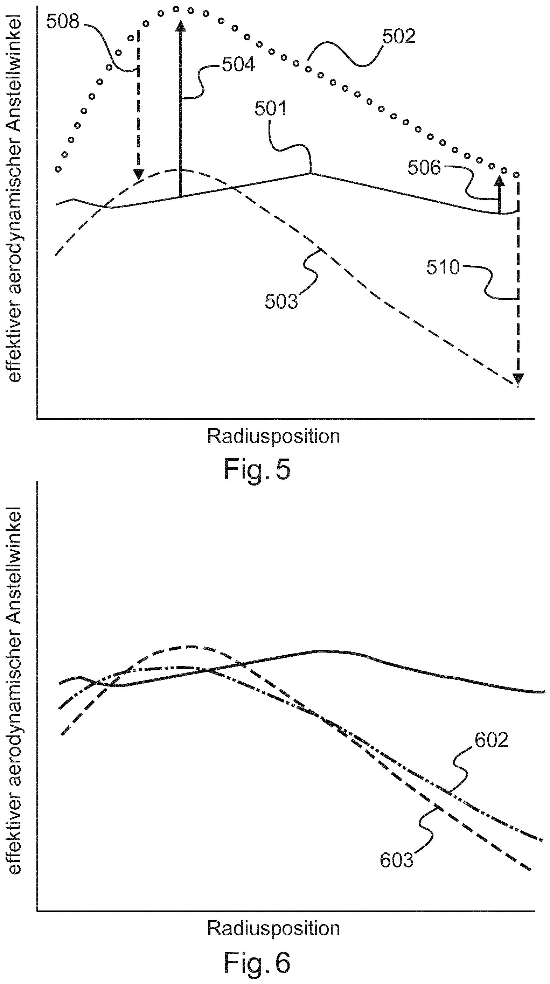

Figur 5 erläutert, warum es beim Stand der Technik zu hohen negativen Anstellwinkel im Blattaußenbereich kommen kann und warum der erfindungsgemäße Vorschlag zu höheren Anstellwinkeln, also weniger negativen Anstellwinkel, führt.

Bei Windgeschwindigkeiten über der Nennwindgeschwindigkeit $V_{Nenn}$ nehmen zum einem die Schnelllaufzahlen kontinuierlich ab, sowie die Blattwinkel, die auch als Pitchwinkel bezeichnet werden, kontinuierlich zu. Die Abnahme der Schnelllaufzahl $\lambda$, die mit der Drehzahl n, dem Blattradius R und der Windgeschwindigkeit $v_{wind}$ über den Zusammenhang

$$\lambda = \frac{v_{tip}}{v_{wind}} = \frac{n \cdot \frac{2\pi}{60} \cdot R}{v_{wind}}$$

verknüpft ist, ist leicht ersichtlich, da die Drehzahl n und damit die Blattspitzengeschwindigkeit $v_{tip}$ im Volllastbereich konstant ist. Der Radius R leitet sich vom Radius des aerodynamischen Rotors ab und wird in dem Sinne als Radius R des Rotorblattes verwendet und damit ist im Grunde die Länge des Rotorblattes zuzüglich des verbleibenden Abstands der Blattwurzel bis zur Drehachse gemeint. Auch die Radiuspositionen des Rotorblattes gemäß den Diagrammen der Figuren 5 und 6 beziehen sich darauf. Die maximale Radiusposition entspricht somit der Blattspitze und die minimale der Rotorblattwurzel.

Jedenfalls ist die Zunahme des Pitchwinkels mit steigender Windgeschwindigkeit ebenso leicht nachvollziehbar, da die Windleistung mit der steigenden Windgeschwindigkeit zunimmt und zur Erzielung der konstanten Nennleistung nur ein im kleiner werdender Bruchteil der in der Anströmung enthaltenen Energie in mechanische Energie an der Rotorwelle umgewandelt werden darf. Die Blätter werden also entsprechend weit aus dem Wind gedreht.

Je geringer die Nennleistung ist, zum Beispiel im Betrieb bei reduzierter Nennleistung, desto höher sind die erforderlichen Pitchwinkel. Der Einfluss abfallender Schnelllaufzahl und ansteigendem Pitchwinkel auf die am Blatt anliegenden Anstellwinkel ist unterschiedlich und soll mit Hilfe von der Figur 5 dargestellt werden. Die durchgezogene Linie 501 zeigt einen typischen Anstellwinkelverlauf über dem Blattradius im leistungsoptimalen Betriebsmodus, der auch als "OM0" bezeichnet wird, im Teillastbereich.

Wird nun nur die Schnelllaufzahl verringert und der Pitchwinkel bleibt vorerst weitestgehend konstant, wie es zum Beispiel beim Übergang vom Teillastbereich in den Nennlastbereich der Fall sein kann, also beim Übergang vom Teillastbetrieb zum Volllastbetrieb, dann stellt sich ein Anstellwinkelverlauf, wie durch die punktierte Linie 502 in Figur 5 dargestellt, ein.

Die Anstellwinkelanstiege sind im Blattinnenbereich am größten und nehmen zur Blattspitze hin ab, in Figur 5 angedeutet durch die 2 durchgezogene Pfeile 504 und 506. Nimmt nun im Nennlastbetrieb, der auch als Volllastbetrieb bezeichnet werden kann, bei zunehmenden Windgeschwindigkeiten auch der Pitchwinkel zu, dann stellt sich die gestrichelte Anstellwinkelverteilung 503 ein. Eine Erhöhung des Pitchwinkels führt zu in etwa gleichmäßiger Abnahme der aerodynamischen Anstellwinkel, angedeutet durch die gestrichelten Pfeile 508 und 510.

Besonders bei hohen Windgeschwindigkeiten und niedriger Leistungsaufnahme durch den Generator entsteht die Situation, dass am Rotorblatt dann gerade sehr niedrige Schnelllaufzahlen bei gleichzeitig großen Pitchwinkeln auftreten. Die Folge daraus ist ein hoher Gradient in den aerodynamischen Anstellwinkeln über den Blattradius, mit höheren Anstellwinkeln im Blattinnenbereich und entsprechend geringeren Anstellwinkeln im Blattaußenbereich, die hohe negative Werte aufweisen können. Ab einer vorhersagbaren Kombination aus Windgeschwindigkeit und leistungsreduziertem Betriebsmodus werden die Anstellwinkel sogar so gering, dass es zu Strömungsablösungen auf der Druckseite des Rotorblattprofils kommen kann, was als negativer Stall bezeichnet wird.

Es wurde besonders erkannt, dass diese Anströmbedingungen zu vermeiden sind, da ein Verharren in diesem Zustand zu einem Aufschwingen des Rotorblattes und letztlich zu strukturellen Schäden an jenem führen kann. Darüber hinaus ist dieser Strömungszustand auch aus akustischer Sicht zu vermeiden, da die Strömungsablösung stark erhöhte Schallemissionen zur Folge haben kann, die auch aufgrund seines Frequenzspektrums als zusätzlich unangenehm empfunden werden können.

Figur 6 erläutert den erfindungsgemäßen Vorschlag, zumindest einen Teil davon. Der erfindungsgemäße Vorschlag setzt nämlich bei der Betriebsführung der Anlage an, um das Problem der hohen negativen Anstellwinkel im Blattaußenbereich zu beheben. Wie bereits beschrieben, sind betragsmäßig hohe negative Anstellwinkel im Blattaußenbereich die Folge niedriger Schnelllaufzahlen bei gleichzeitig hohen Blatteinstellwinkeln. Vergleicht man mit dem Stand der Technik ergibt sich durch den erfindungsgemäßen Vorschlag des Anhebens der Drehzahl bei konstanter, reduzierter elektrischer Leistung ein Anstieg der Schnelllaufzahlen bei gleichzeitigem Absenken der Pitchwinkel, wenn Zustände bei identischen Windgeschwindigkeiten betrachtet werden. Der Pitchwinkel sinkt, weil bei unveränderter Windgeschwindigkeit und konstanter Nennleistung der Leistungsbeiwert der Anlage konstant bleibt. Betrachtet man das Kennfeld des Rotorblattes erkennt man, dass bei niedrigen Schnelllaufzahlen der Pitchwinkel fällt, wenn man sich auf der Isolinie des Leistungsbeiwertes in Richtung ansteigender Schnelllaufzahlen bewegt.

Ein gleichzeitiger Schnelllaufzahlanstieg und Pitchwinkelabfall bei unveränderter Anlagenleistung führt dann beim vorgeschlagenen, neuen Betriebsmode zu einer Anstellwinkelverteilung wie in Figur 6 durch die strichpunktierte Linie 602 dargestellt. Man erkennt im Vergleich mit der Anstellwinkelverteilung nach Stand der Technik im leistungsreduzierten Betrieb, dargestellt durch die gestrichelte Linie 603, dass die Anstellwinkel im Blattinnenbereich abfallen, im Blattaußenbereich jedoch ansteigen, wie erwünscht. Durch den Anstieg der Anstellwinkel im Blattaußenbereich verringert sich das Risiko von Strömungsablösungen auf der Druckseite des Rotorblattes mit den bereits erwähnten negativen Auswirkungen.

Die Erfindung dient somit dem Zweck, beim Betrieb der Windenergieanlage Betriebszustände zu vermeiden, bei denen aeroelastische Phänomene zu Rotorblattschwingungen führen, die zu erhöhten Anlagenlasten führen können. Weiterhin dient die Erfindung dem Zweck, stark erhöhte Schallemissionen im Starkwind/Sturmbetrieb der Anlage zu vermeiden.

## Patentansprüche

1. Verfahren zum Betreiben einer Windenergieanlage (100), und

- die Windenergieanlage (100) weist einen aerodynamischen Rotor (106) mit Rotorblättern auf,
- der Rotor (106) ist mit variabler Rotordrehzahl betreibbar,
- die Windenergieanlage (100) gibt eine aus Wind erzeugte Abgabeleistung zum Einspeisen in ein elektrisches Versorgungsnetz ab,
- die Windenergieanlage (100) ist in einem Normalbetriebsmodus ohne Leistungsreduzierung und
- in einem reduzierten Betriebsmodus mit Leistungsreduzierung betreibbar, in dem eine gegenüber einer Anlagennennleistung reduzierte Vorgabeleistung vorgegeben wird, wobei
- die Windenergieanlage bei Betrieb in dem reduzierten Betriebsmodus für Windgeschwindigkeiten oberhalb einer Nennwindgeschwindigkeit ($V_{Nenn}$), zumindest in einem Drehzahlerhöhungsbereich, ihre Rotordrehzahl bei weiter steigender Windgeschwindigkeit erhöht, wobei trotz sich weiter erhöhender Drehzahl die Abgabeleistung nicht erhöht wird.

2. Verfahren nach Anspruch 1,
**dadurch gekennzeichnet, dass**

- die Windenergieanlage (100) in Abhängigkeit der vorherrschenden Windgeschwindigkeit in einem Teillastbetrieb, einem Volllastbetrieb oder einem Sturmbetrieb betrieben wird, wobei
- im Teillastbetrieb die Windgeschwindigkeit unterhalb einer Nennwindgeschwindigkeit liegt, sodass eine maximal zu erzeugende Leistung nicht erreicht werden kann,
- im Volllastbetrieb die Windgeschwindigkeit bei oder oberhalb der Nennwindgeschwindigkeit ($V_{Nenn}$) aber unterhalb einer Sturmwindgeschwindigkeit liegt, so dass die maximal zu erzeugende Leistung erzeugt wird, und
- im Sturmbetrieb die Windgeschwindigkeit bei oder oberhalb der Sturmanfangswindgeschwindigkeit liegt, und zum Schutz der Windenergieanlage weniger als die maximale Leistung erzeugt wird, und dass
- die Windenergieanlage in dem reduzierten Betriebsmodus ihre Rotordrehzahl im Vollastbetrieb

- für Windgeschwindigkeiten oberhalb der Nennwindgeschwindigkeit ($V_{Nenn}$) bis zu einer Erhöhungswindgeschwindigkeit, die oberhalb der Nennwindgeschwindigkeit ($V_{Nenn}$) und unterhalb der Sturmanfangswindgeschwindigkeit liegt, konstant auf einer reduzierten Nenndrehzahl ($V_{Nenn,red}$) hält und
- für Windgeschwindigkeiten oberhalb der Erhöhungswindgeschwindigkeit ihre Rotordrehzahl erhöht, insbesondere
- mit weiter steigender Windgeschwindigkeit

- kontinuierlich, insbesondere linear, bis zur Sturmanfangswindgeschwindigkeit erhöht, und/oder
- kontinuierlich bis zu einer normalen Nenndrehzahl erhöht.

3. Verfahren nach Anspruch 1 oder 2,
**dadurch gekennzeichnet, dass**
in dem reduzierten Betriebsmodus

- die Abgabeleistung und/oder die Rotordrehzahl (n) in einem bzw. dem Teillastbetrieb in Abhängigkeit einer vorgegebenen Kennlinie, insbesondere einer Drehzahl-Leistungs-Kennlinie (301) eingestellt wird, bis die Abgabeleistung den Wert der reduzierten Vorgabeleistung erreicht, und
- bei weiter steigender Windgeschwindigkeit, insbesondere in einem bzw. dem Volllastbetrieb, die Abgabeleistung auf den Wert der reduzierten Vorgabeleistung geregelt wird und die Rotordrehzahl (n) in Abhängigkeit einer erfassten, insbesondere gemessenen Windgeschwindigkeit eingestellt wird, insbesondere basierend auf einer Windgeschwindigkeits-Drehzahl-Kennlinie, und/oder
- bei weiter steigender Windgeschwindigkeit ab oder oberhalb einer bzw. der Sturmanfangswindgeschwindigkeit die Abgabeleistung und die Rotordrehzahl (n) in Abhängigkeit der erfassten, insbesondere gemessenen Windgeschwindigkeit eingestellt wird, insbesondere basierend auf einer Windgeschwindigkeits-Leistungs-Kennlinie und der Windgeschwindigkeits-Drehzahl-Kennlinie.

4. Verfahren nach einem der vorstehenden Ansprüche,
**dadurch gekennzeichnet, dass**

- die Erhöhung der Rotordrehzahl (n) in dem reduzierten Betriebsmodus oberhalb der reduzierten Nenndrehzahl in Abhängigkeit einer für eine Belastung der Rotorblätter repräsentativen Größe, insbesondere einer erfassten Schwingung wenigstens eines der Rotorblätter, besonders einer Torsionsschwingung, durchgeführt wird, und/oder dass
- die Erhöhung der Rotordrehzahl (n) in dem reduzierten Betriebsmodus oberhalb der reduzierten Nenndrehzahl durchgeführt wird, sobald die für eine Belastung der Rotorblätter repräsentativen Größe, bzw. die erfasste Schwingung wenigstens eines der Rotorblätter, einen vorbestimmten Belastungsgrenzwert überschreitet und/oder
- die Erhöhung der Rotordrehzahl (n) in dem reduzierten Betriebsmodus auf Werte oberhalb der _normalen_Nenndrehzahl durchgeführt wird.

5. Verfahren nach einem der vorstehenden Ansprüche, **dadurch gekennzeichnet, dass**

    - dem Normalbetriebsmodus eine von der Windgeschwindigkeit abhängige Normaldrehzahlkennlinie zu Grunde liegt,
    - dem reduzierten Betriebsmodus eine von der Windgeschwindigkeit abhängige reduzierte Drehzahlkennlinie zu Grunde liegt, und
    - die reduzierte Drehzahlkennlinie

        - im Vollastbetrieb bis zu einer Vereinigungswindgeschwindigkeit geringere Drehzahlwerte aufweist als die Normaldrehzahlkennlinie bei gleichen Windgeschwindigkeitswerten und
        - ab der Vereinigungswindgeschwindigkeit für weiter steigende Windgeschwindigkeit mit der Normaldrehzahlkennlinie teilweise oder vollständig übereinstimmt, und/oder
        - zumindest abschnittsweise höhere Drehzahlen aufweist als die Normaldrehzahlkennlinie.

6. Verfahren nach einem der vorstehenden Ansprüche, **dadurch gekennzeichnet, dass**

    - in dem reduzierten Betriebsmodus die Rotordrehzahl (n) bei Nennwindgeschwindigkeit geringer ist als bei Sturmanfangswindgeschwindigkeit und/oder dass
    - die Vereinigungswindgeschwindigkeit der Sturmanfangswindgeschwindigkeit entspricht, oder darunter liegt.

7. Verfahren nach einem der vorstehenden Ansprüche, **dadurch gekennzeichnet, dass**

    - in einem bzw. dem Teillastbetrieb ein von der Windgeschwindigkeit abhängiger Drehzahlverlauf vorgegeben wird, der im Normalbetriebsmodus und im reduzierten Betriebsmodus gleich ist, bis die Abgabeleistung die reduzierte Vorgabeleistung erreicht,
    - der Wert der Rotordrehzahl, der sich einstellt, wenn die Abgabeleistung die reduzierte Vorgabeleistung erreicht, eine reduzierte Nenndrehzahl bildet, wobei gleichzeitig eine reduzierte Nennwindgeschwindigkeit ($V_{Nenn,red}$) vorliegt, und wobei die reduzierte Nenndrehzahl unterhalb einer Anlagenenndrehzahl liegt, und die reduzierte Nennwindgeschwindigkeit

($V_{Nenn,red}$) unterhalb einer Anlagennennwindgeschwindigkeit liegt, und
    - in dem reduzierten Betriebsmodus bei weiter ansteigender Windgeschwindigkeit bis zu einer bzw. der Erhöhungswindgeschwindigkeit die Rotorblätter so verstellt werden, dass

        - die Abgabeleistung nicht weiter erhöht wird und insbesondere den Wert der reduzierten Vorgabeleistung beibehält, und
        - die Rotordrehzahl (n) auf dem Wert der reduzierten Nenndrehzahl gehalten wird.

8. Verfahren nach einem der vorstehenden Ansprüche, **dadurch gekennzeichnet, dass**

    - die Rotordrehzahl (n) und die Abgabeleistung in dem Teillastbetrieb abhängig einer Drehzahl-Leistungskennlinie gesteuert werden, wobei bis zur reduzierten Vorgabeleistung bzw. bis zur reduzierten Nennleistung für den Normalbetriebsmodus und den reduzierten Betriebsmodus die gleiche Drehzahl-Leistungskennlinie verwendet wird,
    - die Rotordrehzahl (n) und die Abgabeleistung ab einer Windgeschwindigkeit oberhalb einer zweiten Sturmwindgeschwindigkeit, die größer ist als die Sturmanfangswindgeschwindigkeit, mit zunehmender Windgeschwindigkeit reduziert werden, wobei

        - für die Reduzierung der Rotordrehzahl (n) eine bzw. die von der Windgeschwindigkeit abhängige Drehzahlkennlinie vorgegeben wird und
        - für die Reduzierung der Abgabeleistung eine Leistungskennlinie vorgegeben wird und
        - für den Normalbetriebsmodus und den reduzierten Betriebsmodus die gleiche Drehzahlkennlinie und die gleiche Leistungskennlinie für Windgeschwindigkeiten ab der zweiten Sturmwindgeschwindigkeit verwendet werden.

9. Windenergieanlage umfassend

    - einen elektrischen Generator zum Erzeugen elektrischer Leistung,
    - einen aerodynamischen Rotor mit Rotorblättern zum Erzeugen einer mechanischen Leistung aus Wind zum Antreiben des Generators, wobei
    - der Rotor mit variabler Rotordrehzahl betreibbar ist,
    - eine Einspeiseeinrichtung, um eine aus Wind erzeugte Abgabeleistung in ein elektrisches Versorgungsnetz an einem Netzanschlusspunkt einzuspeisen,

- eine Umschalteinrichtung (142) zum Umschalten eines Betriebs der Windenergieanlage zwischen

- einem Normalbetriebsmodus ohne Leistungsreduzierung und
- einem reduzierten Betriebsmodus mit Leistungsreduzierung, wobei in dem reduzierten Betriebsmodus eine gegenüber einer Anlagennennleistung reduzierte Vorgabeleistung vorgegeben wird, und

- eine Steuereinrichtung (140) **dadurch gekennzeichnet,**

**dass** die Steuereinrichtung dazu vorbereitet ist, die Windenergieanlage so zu steuern, dass

- bei Betrieb in dem reduzierten Betriebsmodus und
- für Windgeschwindigkeiten oberhalb einer Nennwindgeschwindigkeit ($V_{Nenn}$), zumindest in einem Drehzahlerhöhungsbereich, die Rotordrehzahl (n) bei weiter steigender Windgeschwindigkeit erhöht wird, wobei trotz sich weiter erhöhender Drehzahl die Abgabeleistung nicht erhöht wird.

10. Windenergieanlage (100) nach Anspruch 9,
**dadurch gekennzeichnet, dass**
die Windenergieanlage (100), insbesondere die Steuereinrichtung (140), dazu vorbereitet ist, ein Verfahren gemäß einem der Ansprüche 1 bis 8 auszuführen.

11. Windpark (112) mit mehreren Windenergieanlagen nach Anspruch 9 oder 10, wobei die Windenergieanlagen an einem gemeinsamen Netzanschlusspunkt in ein elektrisches Versorgungsnetz (138) einspeisen.

12. Windpark nach Anspruch 11,
**dadurch gekennzeichnet, dass**
er eine zentrale Parksteuerung (150) aufweist, um jeweils eine reduzierte Vorgabeleistung an die Windenergieanlagen (100) zu geben, insbesondere in Abhängigkeit einer von extern empfangenen gesamten Leistungsreduzierung für den Windpark (112).

**Claims**

1. A method for operating a wind power installation (100), and

- the wind power installation (100) comprises an aerodynamic rotor (106) with rotor blades,
- the rotor (106) can be operated with a variable rotor rotation speed,
- the wind power installation (100) outputs an output power generated from wind for feeding into an electrical supply grid,
- the wind power installation (100) can be operated in a normal operating mode without power reduction and
- in a reduced operating mode with power reduction, in which a specified power reduced with respect to a rated installation power is specified, wherein
- when operating in the reduced operating mode for wind speeds above a rated wind speed ($V_{Nenn}$), at least in one rotation speed increase region, the wind power installation increases its rotor rotation speed as the wind speed rises further, wherein in spite of the continued increase in the rotation speed the output power is not increased.

2. The method as claimed in claim 1,
**characterized in that**

- depending on the prevailing wind speed, the wind power installation (100) is operated in a partial load operation, a full-load operation, or a storm operation, wherein
- in partial-load operation, the wind speed lies below a rated wind speed, so that a maximum power that can be generated can not be achieved,
- in full-load operation, the wind speed lies at or above the rated wind speed ($V_{Nenn}$) but below a storm wind speed, so that the maximum power that can be generated is generated, and
- in storm operation the wind speed lies at or above the initial storm wind speed, and less than the maximum power is generated in order to protect the wind power installation, and **in that**
- in the reduced operating mode in full-load operation, the wind power installation

- for wind speeds above the rated wind speed ($V_{Nenn}$) up to an escalation wind speed which lies above the rated wind speed ($V_{Nenn}$) and below the initial storm wind speed, holds its rotor rotation speed constant at a reduced rated rotation speed ($V_{Nenn,red}$) and
- for wind speeds above the escalation wind speed, increases its rotor rotation speed, in particular
- as the wind speed rises further

- increases its rotor rotation speed continuously, in particular linearly, up to the initial storm wind speed, and/or

- increases it continuously up to a normal rated rotation speed.

3. The method as claimed in claim 1 or 2, **characterized in that** in the reduced operating mode

- the output power and/or the rotor rotation speed (n) in a or the partial-load operation is set depending on a predefined characteristic curve, in particular a characteristic rotation speed-power curve (301), until the output power reaches the value of the reduced specified power, and
- as the wind speed continues to rise, in particular in a or the full-load operation, the output power is regulated to the value of the reduced specified power and the rotor rotation speed (n) is set depending on an ascertained, in particular a measured, wind speed, in particular on the basis of a characteristic wind speed-rotation speed curve, and/or
- with a further rise in wind speed from or above a or the initial storm wind speed, the output power and the rotor rotation speed (n) is set depending on the ascertained, in particular measured, wind speed, in particular on the basis of a characteristic wind speed-power curve and the characteristic wind speed-rotation speed curve.

4. The method as claimed in one of the preceding claims, **characterized in that**

- the increase in the rotor rotation speed (n) in the reduced operating mode is carried out above the reduced rated rotation speed depending on a variable representative for a stress on the rotor blades, in particular depending on an ascertained oscillation of at least one of the rotor blades, in particular a torsional oscillation, and/or **in that**
- the increase in the rotor rotation speed (n) in the reduced operating mode is carried out above the reduced rated rotation speed as soon as the variable that is representative of a stress on the rotor blades, or the ascertained oscillation, of at least one of the rotor blades exceeds a predefined stress threshold, and/or
- the increase in the rotor rotation speed (n) in the reduced operating mode is carried out at values above the normal rated rotation speed.

5. The method as claimed in one of the preceding claims, **characterized in that**

- the normal operating mode is based on a normal characteristic rotation speed curve that depends on the wind speed,
- the reduced operating mode is based on a reduced characteristic rotation speed curve that depends on the wind speed,
- the reduced characteristic rotation speed curve

- in full-load operation up to a unification wind speed has lower rotation speed values than the normal characteristic rotation speed curve at the same wind speed values and
- partially or fully matches the normal characteristic rotation speed curve for further rising wind speed above the unification wind speed, and/or
- has higher rotation speeds, at least in sections, than the normal characteristic rotation speed curve.

6. The method as claimed in one of the preceding claims, **characterized in that**

- in the reduced operating mode, the rotor rotation speed (n) is lower at the rated wind speed than at the initial storm wind speed and/or **in that**
- the unification wind speed corresponds to the initial storm wind speed, or lies below it.

7. The method as claimed in one of the preceding claims, **characterized in that**

- a rotation speed curve that depends on the wind speed in a or the partial-load operation is specified which is the same in the normal operating mode and in the reduced operating mode, until the output power reaches the reduced specified power,
- the value of the rotor rotation speed that develops when the output power reaches the reduced specified power forms a reduced rated rotation speed, wherein at the same time a reduced rated wind speed ($V_{Nenn,red}$) is present, and wherein the reduced rated rotation speed lies below an installation rated rotation speed, and the reduced rated wind speed ($V_{Nenn,red}$) lies below an installation rated wind speed, and
- in the reduced operating mode, as the wind speed rises further up to a or the escalation wind speed, the rotor blades are adjusted in such a way that

- the output power is not increased further, and in particular retains the value of the reduced specified power, and

- the rotor rotation speed (n) is held at the value of the reduced rated rotation speed.

8. The method as claimed in one of the preceding claims, **characterized in that**

- the rotor rotation speed (n) and the output power in the partial-load operation are controlled depending on a characteristic rotation speed-power curve, wherein the same characteristic rotation speed-power curve is used for the normal operating mode and the reduced operating mode up to the reduced specified power and/or up to the reduced rated power,
- the rotor rotation speed (n) and the output power are reduced as the wind speed increases above a wind speed that is greater than a second storm wind speed that is greater than the initial storm wind speed, wherein

- a or the characteristic rotation speed curve that depends on the wind speed is specified for the reduction of the rotor rotation speed (n), and
- a characteristic power curve is specified for the reduction of the output power and

- the same characteristic rotation speed curve and the same characteristic power curve are used for the normal operating mode and the reduced operating mode for wind speeds above the second storm wind speed.

9. A wind power installation comprising

- an electric generator for generating electric power,
- an aerodynamic rotor with rotor blades for generating a mechanical power from wind for driving the generator, wherein
- the rotor can be operated with variable rotor rotation speed,
- a feed apparatus in order to feed an output power generated from wind into an electrical supply grid at a grid connection point,
- a switching apparatus (142) for switching an operation of the wind power installation between

- a normal operating mode without power reduction and
- a reduced operating mode with power reduction, wherein in the reduced operating mode a specified power reduced with respect to a rated installation power is specified, and

- a control apparatus (140),

**characterized in that** the control apparatus is configured to control the wind power installation in such a way that

- when operating in the reduced operating mode and
- for wind speeds above a rated wind speed ($V_{Nenn}$), at least in a rotation speed increase region, the rotor rotation speed (n) is increased as the wind speed rises further, wherein in spite of the continued increase in the rotation speed the output power is not increased.

10. The wind power installation (100) as claimed in claim 9,
**characterized in that**
the wind power installation (100), in particular the control apparatus (140) is configured to carry out a method as claimed in one of claims 1 to 8.

11. A wind farm (112) with a plurality of wind power installations as claimed in claim 9 or 10, wherein the wind power installations feed into an electrical supply grid (138) at a common grid connection point.

12. The wind farm as claimed in claim 11,
**characterized in that**
it comprises a central farm controller (15) in order in each case to specify a reduced specified power to the wind power installations (100), in particular depending on a total power reduction for the wind farm (112) received from outside.

**Revendications**

1. Procédé destiné à faire fonctionner une éolienne (100), et

- l'éolienne (100) présente un rotor aérodynamique (106) avec des pales de rotor,
- le rotor (106) peut fonctionner avec une vitesse de rotation de rotor variable,
- l'éolienne (100) délivre une puissance délivrée générée à partir du vent destinée à être injectée dans un réseau d'alimentation électrique,
- l'éolienne (100) est sans réduction de puissance dans un mode de fonctionnement normal, et
- peut fonctionner dans un mode de fonctionnement réduit avec une réduction de puissance, dans lequel une puissance de consigne réduite par rapport à une puissance nominale d'installation est spécifiée, dans lequel
- l'éolienne augmente sa vitesse de rotation de rotor en cas de vitesse de vent en hausse continue lors du fonctionnement dans le mode de fonctionnement réduit pour des vitesses de vent supérieures à une vitesse de vent nominale ($V_{Nom}$), au moins dans une plage d'augmentation de vitesse de rotation, dans lequel la puissance délivrée n'est pas augmentée malgré une augmentation continue de la vitesse de rotation.

2. Procédé selon la revendication 1, **caractérisé en ce que**

- l'éolienne (100), en fonction de la vitesse de vent prédominante, fonctionne dans un mode de fonctionnement à régime partiel, dans un mode de fonctionnement à plein régime ou dans un mode de fonctionnement de tempête, dans lequel

- dans le mode de fonctionnement à régime partiel, la vitesse de vent est inférieure à une vitesse de vent nominale, si bien qu'une puissance à générer au maximum ne peut pas être atteinte,

- dans le mode de fonctionnement à plein régime, la vitesse de vent est de l'ordre de la vitesse de vent nominale ($V_{nom}$) ou est supérieure à celle-ci, toutefois est inférieure à une vitesse de vent de tempête, de sorte que la puissance à générer au maximum est générée, et

- dans le mode de fonctionnement de tempête, la vitesse de vent est de l'ordre de la vitesse de vent de début de tempête ou est supérieure à celle-ci et une puissance inférieure à la puissance maximale est générée pour protéger l'éolienne, et que

- l'éolienne maintient, dans le mode de fonctionnement réduit, sa vitesse de rotation de rotor dans le mode de fonctionnement à plein régime

- constante sur une vitesse de rotation nominale réduite ($V_{Nom,réd}$) pour des vitesses de vent supérieures à la vitesse de vent nominale ($V_{Nom}$) jusqu'à une vitesse de vent d'augmentation, qui est supérieure à la vitesse de vent nominale ($V_{Nom}$) et est inférieure à la vitesse de vent de début de tempête, et

- augmente sa vitesse de rotation de rotor pour des vitesses de vent supérieures à la vitesse de vent d'augmentation, en particulier

- avec une vitesse de vent en hausse continue,

- l'augmente en continu, en particulier de manière linéaire, jusqu'à la vitesse de vent de tempête, et/ou

- l'augmente en continu jusqu'à une vitesse de rotation nominale normale.

3. Procédé selon la revendication 1 ou 2, **caractérisé en ce que** dans le mode de fonctionnement réduit,

- la puissance délivrée et/ou la vitesse de rotation de rotor (n) sont réglées dans un ou le mode de fonctionnement à régime partiel en fonction d'une courbe caractéristique spécifiée, en particulier d'une courbe caractéristique vitesse de rotation-puissance (301) jusqu'à ce que la puissance délivrée atteigne la valeur de la puissance de consigne réduite, et

- dans le cas d'une vitesse de vent en hausse continue, en particulier dans un ou le mode de fonctionnement à plein régime, la puissance délivrée est régulée sur la valeur de la puissance de consigne réduite et la vitesse de rotation de rotor (n) est réglée en fonction d'une vitesse de vent détectée, en particulier mesurée, en particulier sur la base d'une courbe caractéristique vitesse de vent-vitesse de rotation, et/ou

- dans le cas d'une vitesse de vent en hausse continue depuis ou au-dessus d'une ou de la vitesse de vent de début de tempête, la puissance délivrée et la vitesse de rotation de rotor (n) sont réglées en fonction de la vitesse de vent détectée, en particulier mesurée, en particulier sur la base d'une courbe caractéristique vitesse de vent-puissance et de la courbe caractéristique vitesse de vent-vitesse de rotation.

4. Procédé selon l'une quelconque des revendications précédentes, **caractérisé en ce que**

- l'augmentation de la vitesse de rotation de rotor (n) est effectuée dans le mode de fonctionnement réduit au-dessus de la vitesse de rotation nominale réduite en fonction d'une grandeur représentative d'une charge des pales de rotor, en particulier d'une oscillation détectée d'au moins une des pales de rotor, en particulier d'une oscillation de torsion, et/ou que

- l'augmentation de la vitesse de rotation de rotor (n) est effectuée dans le mode de fonctionnement réduit au-dessus de la vitesse de rotation nominale réduite dès que la grandeur représentative d'une charge des pales de rotor ou l'oscillation détectée d'au moins une des pales de rotor dépasse une valeur limite de charge prédéfinie, et/ou

- l'augmentation de la vitesse de rotation de rotor (n) est effectuée dans le mode de fonctionnement réduit sur des valeurs supérieures à la vitesse de rotation nominale normale.

5. Procédé selon l'une quelconque des revendications précédentes, **caractérisé en ce que**

- une courbe caractéristique de vitesse de rotation normale dépendant de la vitesse de vent est sous-jacente au mode de fonctionnement normal,

- une courbe caractéristique de vitesse de rotation réduite dépendant de la vitesse de vent est sous-jacente au mode de fonctionnement réduit, et

- la courbe caractéristique de vitesse de rotation réduite

- présente, dans le mode de fonctionnement à plein régime, jusqu'à une vitesse de vent de regroupement, des valeurs de vitesse de rotation inférieures à la courbe caractéristique de vitesse de rotation normale pour des valeurs de vitesse de vent identiques, et

- concorde en partie ou en totalité avec la courbe caractéristique de vitesse de rotation normale à partir de la vitesse de vent de regroupement pour une vitesse de vent en hausse continue, et/ou

- présente au moins par endroits des vitesses de rotation plus élevées que la courbe caractéristique de vitesse de rotation normale.

6. Procédé selon l'une quelconque des revendications précédentes,
   **caractérisé en ce que**

- dans le mode de fonctionnement réduit, la vitesse de rotation de rotor (n) est inférieure, en présence d'une vitesse de vent nominale, à celle en présence d'une vitesse de vent de début de tempête, et/ou que

- la vitesse de vent de regroupement correspond à la vitesse de vent de début de tempête ou est inférieure à celle-ci.

7. Procédé selon l'une quelconque des revendications précédentes,
   **caractérisé en ce que**

- dans un ou le mode de fonctionnement à régime partiel, une variation de vitesse de rotation dépendant de la vitesse de vent est spécifiée, qui est identique dans le mode de fonctionnement normal et dans le mode de fonctionnement réduit jusqu'à ce que la puissance délivrée atteigne la puissance de consigne réduite,

- la valeur de la vitesse de rotation de rotor, qui se règle lorsque la puissance délivrée atteint la puissance de consigne réduite, forme une vitesse de rotation nominale réduite, dans lequel une vitesse de vent nominale réduite ($V_{Nom,réd}$) est simultanément présente, et dans lequel la vitesse de rotation nominale réduite est inférieure à une vitesse de rotation nominale d'installation, et la vitesse de vent nominale réduite ($V_{Nom,réd}$) est inférieure à la vitesse de vent nominale d'installation, et

- dans le mode de fonctionnement réduit, les pales de rotor sont ajustées lorsque la vitesse de vent est en hausse continue jusqu'à une ou la vitesse de vent d'augmentation de telle sorte que

- la puissance délivrée n'est plus augmentée et conserve en particulier la valeur de la puissance de consigne réduite, et

- la vitesse de rotation de rotor (n) est maintenue sur la valeur de la vitesse de rotation nominale réduite.

8. Procédé selon l'une quelconque des revendications précédentes,
   **caractérisé en ce que**

- la vitesse de rotation de rotor (n) et la puissance délivrée sont commandées, dans le mode de fonctionnement à régime partiel, en fonction d'une courbe caractéristique vitesse de rotation-puissance, dans lequel la même courbe caractéristique vitesse de rotation-puissance est utilisée jusqu'à la puissance de consigne réduite ou jusqu'à la puissance nominale réduite pour le mode de fonctionnement normal et le mode de fonctionnement réduit,

- la vitesse de rotation de rotor (n) et la puissance délivrée sont réduites au fur et à mesure que la vitesse de vent augmente à partir d'une vitesse de vent supérieure à une deuxième vitesse de vent de tempête, qui est plus importante que la vitesse de vent de début de tempête, dans lequel

- une ou la courbe caractéristique dépendant de la vitesse de vent est spécifiée pour la réduction de la vitesse de rotation de rotor (n) et

- une courbe caractéristique de puissance est spécifiée pour la réduction de la puissance délivrée, et

- la même courbe caractéristique de vitesse de rotation et la même courbe caractéristique de puissance sont utilisées pour des vitesses de vent à partir de la deuxième vitesse de vent de tempête pour le mode de fonctionnement normal et le mode de fonctionnement réduit.

9. Éolienne comprenant

- un générateur électrique destiné à générer une puissance électrique,

- un rotor aérodynamique avec des pales de rotor pour générer une puissance mécanique à partir du vent pour entraîner le générateur, dans laquelle

- le rotor peut fonctionner avec une vitesse de rotation variable,

- un dispositif d'injection pour injecter une puissance délivrée générée à partir du vent dans un réseau d'alimentation électrique sur un point de branchement au réseau,

- un dispositif de commutation (142) destiné à commuter un fonctionnement de l'éolienne entre

- un mode de fonctionnement normal sans réduction de puissance et
- un mode de fonctionnement réduit avec une réduction de puissance, dans laquelle

une puissance de consigne par rapport à une puissance nominale d'installation est spécifiée dans le mode de fonctionnement réduit, et

- un dispositif de commande (140), **caractérisée en ce**

**que** le dispositif de commande est préparé pour commander l'éolienne de telle sorte que

- lors du fonctionnement dans le mode de fonctionnement réduit et
- pour des vitesses de vent supérieures à une vitesse de vent nominale ($V_{Nom}$), au moins dans une plage d'augmentation de vitesse de rotation, la vitesse de rotation de rotor (n) est augmentée pour un vent en hausse continue, dans laquelle, malgré l'augmentation continue de la vitesse de rotation, la puissance délivrée n'est pas augmentée.

10. Éolienne (100) selon la revendication 9, **caractérisée en ce que**
l'éolienne (100), en particulier le dispositif de commande (140), est préparée pour exécuter un procédé selon l'une quelconque des revendications 1 à 8.

11. Parc éolien (112) avec plusieurs éoliennes selon la revendication 9 ou 10, dans lequel les éoliennes procèdent à une injection dans un réseau d'alimentation électrique (138) sur un point de branchement au réseau commun.

12. Parc éolien selon la revendication 11, **caractérisé en ce que**
il présente une commande de parc centrale (150) pour donner respectivement une puissance de consigne réduite aux éoliennes (100), en particulier en fonction d'une réduction de puissance globale reçue depuis l'extérieur pour le parc éolien (112).

Fig. 1

Fig. 2

Fig. 3

Fig. 4

Fig.5

Fig.6

**EP 3 810 924 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19844258 A1
- DE 102015203841 A1
- DE 102016124630 A1
- US 20120139246 A1
- US 20180051675 A1